(19) Europäisches Patentamt
European Patent Office
Office européen des brevets

(11) **EP 4 299 642 A1**

(12) **EUROPEAN PATENT APPLICATION**
published in accordance with Art. 153(4) EPC

(43) Date of publication:
**03.01.2024 Bulletin 2024/01**

(51) International Patent Classification (IPC):
*C08F 265/06* (2006.01)     *C08J 3/02* (2006.01)

(21) Application number: 22759697.0

(22) Date of filing: **24.02.2022**

(52) Cooperative Patent Classification (CPC):
(C-Sets available)
**C08F 120/18; C08F 6/20; C08F 14/26;
C08F 265/06; C08J 3/02; C08L 27/18; C08L 71/02;
C09D 127/18**                                    (Cont.)

(86) International application number:
**PCT/JP2022/007503**

(87) International publication number:
**WO 2022/181662 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **24.02.2021  JP 2021027626**

(71) Applicant: AGC INC.
**Chiyoda-ku,
Tokyo 1008405 (JP)**

(72) Inventors:
• **HIGUCHI Shinya**
  **Tokyo 100-8405 (JP)**
• **ABE Kaori**
  **Tokyo 100-8405 (JP)**
• **KOSE Takehiro**
  **Tokyo 100-8405 (JP)**

(74) Representative: **Müller-Boré & Partner
Patentanwälte PartG mbB
Friedenheimer Brücke 21
80639 München (DE)**

(54) **METHOD FOR PRODUCING POLYTETRAFLUOROETHYLENE AQUEOUS DISPERSION**

(57)     To provide a method for producing an aqueous polytetrafluoroethylene dispersion, whereby the formation of fluorinated oligomers as byproducts is minimized, CFT of the formed coating film is large, and a highly concentrated aqueous polytetrafluoroethylene dispersion is easily obtainable.

The method for producing an aqueous polytetrafluoroethylene dispersion, which comprises step A1 of polymerizing a non-fluorinated monomer in an aqueous medium to obtain a solution 1 containing a polymer containing units based on the non-fluorinated monomer, step A2 of conducting polymerization of tetrafluoroethylene in the solution 1 without substantially adding a surfactant to the solution 1, to obtain an aqueous emulsion containing polytetrafluoroethylene particles, and step A3 of adding a nonionic surfactant to the aqueous emulsion at a rate of from 10 to 150 mass% to the mass of PTFE contained in the aqueous emulsion, and subsequently concentrating the aqueous emulsion to obtain an aqueous polytetrafluoroethylene dispersion, wherein the amount of the non-fluorinated monomer used, to the amount of the tetrafluoroethylene supplied to the polymerization system, is at most 200 mass ppm.

**(Cont. next page)**

EP 4 299 642 A1

(52) Cooperative Patent Classification (CPC): (Cont.)

C-Sets
**C08F 6/20, C08L 27/18;**
**C08F 14/26, C08F 2/20;**
**C08L 27/18, C08L 71/02;**
**C08L 71/02, C08L 27/18;**
**C09D 127/18, C08L 71/02**

**Description**

TECHNICAL FIELD

The present invention relates to a method for producing an aqueous polytetrafluoroethylene dispersion.

BACKGROUND ART

Polytetrafluoroethylene is used in various applications due to its excellent properties.

Heretofore, at the time of the production for polytetrafluoroethylene, a fluorinated surfactant such as perfluorooctanoate has been used. However, from an environmental standpoint, it has been desired to refrain from using a fluorinated surfactant.

Therefore, as one of the new production methods for polytetrafluoroethylene, a method of using a hydrocarbon-containing surfactant at the time of polymerizing tetrafluoroethylene has been proposed (Patent Document 1).

PRIOR ART DOCUMENT

PATENT DOCUMENT

Patent Document 1: JP-A-2016-537499

DISCLOSURE OF INVENTION

TECHNICAL PROBLEM

On the other hand, when a hydrocarbon-containing surfactant is used, a chain transfer reaction occurs to the hydrocarbon-containing surfactant at the time of polymerizing tetrafluoroethylene. Therefore, in the method of using this hydrocarbon-containing surfactant, the presence of fluorinated oligomers with various chain length distributions (especially fluorinated oligomers with hydrophilic functional groups), which have not been confirmed in the conventional method of using fluorinated surfactants, was confirmed in the products. As mentioned above, such fluorinated oligomers are byproducts generated by the hydrocarbon-containing surfactant acting as chain transfer starting points. The presence of such byproducts is undesirable from an environmental standpoint.

Further, with respect to the aqueous dispersion containing polytetrafluoroethylene particles, it is desired that the crack critical film thickness (CFT) of the coating film to be formed be large. The above CFT corresponds to the thickness at which cracking begins to occur when the aqueous dispersion containing polytetrafluoroethylene particles is applied to form a coating film with at least a certain thickness and then fired.

The present invention is concerned with providing a method for producing an aqueous polytetrafluoroethylene dispersion whereby the formation of fluorinated oligomers as byproducts is minimal, CFT of the coating film formed is large, and a highly concentrated aqueous polytetrafluoroethylene dispersion is easily obtainable.

SOLUTION TO THE PROBLEM

As a result of an extensive study, the present inventors have found it possible to solve the above problem by the following construction.

(1) A method for producing an aqueous polytetrafluoroethylene dispersion, which comprises

step A1 of polymerizing a non-fluorinated monomer in an aqueous medium to obtain a solution 1 containing a polymer containing units based on the non-fluorinated monomer,
step A2 of conducting polymerization of tetrafluoroethylene in the solution 1 without substantially adding any surfactant to the solution 1, to obtain an aqueous emulsion containing polytetrafluoroethylene particles, and
step A3 of adding a nonionic surfactant to the aqueous emulsion at a rate of from 10 to 150 mass% to the mass of polytetrafluoroethylene contained in the aqueous emulsion, and subsequently concentrating the aqueous emulsion to obtain an aqueous polytetrafluoroethylene dispersion,
wherein the amount of the non-fluorinated monomer used, to the amount of the tetrafluoroethylene supplied to the polymerization system, is at most 200 mass ppm.

(2) The method for producing an aqueous polytetrafluoroethylene dispersion according to (1), wherein between step A2 and step A3, or at the time of step A3, an anionic surfactant is added to the aqueous emulsion at a rate of from 1,000 to 5,000 mass ppm to the mass of polytetrafluoroethylene contained in the aqueous emulsion.

(3) The method for producing an aqueous polytetrafluoroethylene dispersion according to (1) or (2), wherein the non-fluorinated monomer is a monomer represented by the formula (1) as described below.

(4) The method for producing an aqueous polytetrafluoroethylene dispersion according to any one of (1) to (3), wherein the content of the polytetrafluoroethylene particles in the aqueous polytetrafluoroethylene dispersion is from 50 to 70 mass% to the entire amount of the aqueous polytetrafluoroethylene dispersion.

(5) The method for producing an aqueous polytetrafluoroethylene dispersion according to any one of (1) to (4), wherein in step A3, after adding the nonionic surfactant to the aqueous emulsion at a rate of from 10 to 150 mass% to the mass of the polytetrafluoroethylene contained in the aqueous emulsion, the aqueous emulsion is heated at from 50 to 100°C and further allowed to stand still for from 1 to 10 hours to let the aqueous emulsion undergo phase-separation, whereupon the lower phase in which the polytetrafluoroethylene particles are concentrated is recovered as the aqueous polytetrafluoroethylene dispersion.

(6) A method for producing an aqueous polytetrafluoroethylene dispersion, which comprises

> step B1 of mixing at least one type of nucleating additive selected from the group consisting of a polyalkylene oxide compound and a hydrocarbon-containing surfactant, and an oxidizing agent in an aqueous medium to obtain a solution 2,
> step B2 of conducting polymerization of tetrafluoroethylene in the solution 2 without substantially adding any surfactant to the solution 2 to obtain an aqueous emulsion containing polytetrafluoroethylene particles, and
> step B3 of adding a nonionic surfactant to the aqueous emulsion at a rate of from 10 to 150 mass% to the mass of polytetrafluoroethylene contained in the aqueous emulsion, and subsequently concentrating the aqueous emulsion to obtain an aqueous polytetrafluoroethylene dispersion,
> wherein the amount of the nucleating additive used, to the amount of the tetrafluoroethylene supplied to the polymerization system is at most 100 mass ppm.

(7) The method for producing an aqueous polytetrafluoroethylene dispersion according to (6), wherein between step B2 and step B3, or at the time of step B3, an anionic surfactant is added to the aqueous emulsion at a rate of from 1,000 to 5,000 mass ppm to the mass of the polytetrafluoroethylene contained in the aqueous emulsion.

(8) The method for producing an aqueous polytetrafluoroethylene dispersion according to (6) or (7), wherein the content of the polytetrafluoroethylene particles in the aqueous polytetrafluoroethylene dispersion is from 50 to 70 mass% to the entire amount of the aqueous polytetrafluoroethylene dispersion.

(9) The method for producing an aqueous polytetrafluoroethylene dispersion according to any one of (6) to (8), wherein in step B3, after adding the nonionic surfactant to the aqueous emulsion at a rate of from 10 to 150 mass% to the mass of the polytetrafluoroethylene contained in the aqueous emulsion, the aqueous emulsion is heated at from 50 to 100°C and further allowed to stand still for from 1 to 10 hours to let the aqueous emulsion undergo phase-separation, whereupon the lower phase in which the polytetrafluoroethylene particles are concentrated is recovered as the aqueous polytetrafluoroethylene dispersion.

(10) The method for producing an aqueous polytetrafluoroethylene dispersion according to any one of (6) to (9), wherein the nucleating additive is a polyalkylene oxide compound.

(11) The method for producing an aqueous polytetrafluoroethylene dispersion according to any one of (6) to (10), wherein the amount of the oxidizing agent used is from 0.5 to 100 mass ppm to the entire mass of the aqueous medium.

(12) A method for producing an aqueous polytetrafluoroethylene dispersion, which comprises

> step C1 of conducting polymerization of tetrafluoroethylene in an aqueous medium in the presence of a polyalkylene oxide compound, without substantially using any surfactant, to obtain an aqueous emulsion containing polytetrafluoroethylene particles, and
> step C2 of adding a nonionic surfactant to the aqueous emulsion at a rate of from 10 to 150 mass% to the mass of polytetrafluoroethylene contained in the aqueous emulsion, and subsequently concentrating the aqueous emulsion to obtain a aqueous polytetrafluoroethylene dispersion,
> wherein the amount of the polyalkylene oxide compound used is at most 100 mass ppm to the amount of the tetrafluoroethylene supplied to the polymerization system.

(13) The method for producing an aqueous polytetrafluoroethylene dispersion according to (12), wherein between step C1 and step C2, or at the time of step C2, an anionic surfactant is added to the aqueous emulsion, at a rate of from 1,000 to 5,000 mass ppm to the mass of the polytetrafluoroethylene contained in the aqueous emulsion.

(14) The method for producing an aqueous polytetrafluoroethylene dispersion according to (12) or (13), wherein in step C2, after adding the nonionic surfactant to the aqueous emulsion at a rate of from 10 to 150 mass% to the mass of the polytetrafluoroethylene contained in the aqueous emulsion, the aqueous emulsion is heated at from 50 to 100°C and further allowed to stand still for from 1 to 10 hours to let the aqueous emulsion undergo phase-separation, whereupon the lower phase in which the polytetrafluoroethylene particles are concentrated is recovered as the aqueous polytetrafluoroethylene dispersion.

ADVANTAGEOUS EFFECTS OF INVENTION

According to the present invention, it is possible to provide a method for producing an aqueous polytetrafluoroethylene dispersion, whereby the formation of fluorinated oligomers as by-products is reduced, CFT of the coating film formed is large, and a highly concentrated aqueous polytetrafluoroethylene dispersion is easily obtainable.

DESCRIPTION OF EMBODIMENTS

The meanings of the terms in the present invention are as follows.
A "unit" is a generic term for an atomic group derived from a single monomer molecule, formed directly by polymerization of the monomer.
A numerical range represented by using " to " means a range that includes the numerical values listed before and after" to " as the lower limit value and the upper limit value.
As the characteristic points of the first and second embodiments of the method for producing an aqueous polytetrafluoroethylene (hereinafter referred to also as "PTFE") dispersion of the present invention, a point that a solution 1 containing a polymer containing units based on a non-fluorinated monomer (hereinafter referred to also as the "specific polymer") and an aqueous medium, is used, or a solution 2 obtainable by mixing at least one type of nucleating additive selected from the group consisting of a polyalkylene oxide compound and a hydrocarbon-containing surfactant, and an oxidizing agent, in an aqueous medium, is used, a point that substantially no surfactant is used at the time of conducting polymerization of tetrafluoroethylene (hereinafter referred to also as "TFE"), a point that the amounts of the non-fluorinated monomer and the nucleating additive are adjusted, and a point that a predetermined amount of a nonionic surfactant is used at the time of concentrating the aqueous emulsion after polymerization of TFE, may be mentioned.
The solution 1 and the solution 2 can provide a hydrophobic environmental field where polymerization of TFE can be proceeded stably while suppressing the occurrence of chain transfers. As a result, the formation of fluorinated oligomers as by-products can be suppressed. Further, it has been found that CFT of the coating film to be formed can be increased by adjusting the amounts of the non-fluorinated monomer and the nucleating additive used.
Here, the fluorinated oligomers mainly include $C_{6-34}$ oligomers having $CF_2$ linked together.
Further, it has been found that by using a predetermined amount of the nonionic surfactant, a highly concentrated aqueous PTFE dispersion can be easily obtained.
As the characteristic points of the third embodiment of the method for producing an aqueous PTFE dispersion of the present invention, a point that the polymerization of TFE is carried out in an aqueous medium in the presence of a predetermined amount of polyalkylene oxide compound without addition of any surfactant substantially, and a point that after polymerization of TFE, at the time of concentrating the aqueous emulsion, a predetermined amount of a nonionic surfactant is used, may be mentioned.

<<First embodiment>>

As the first embodiment of the method for producing an aqueous PTFE dispersion, an embodiment having the following three steps may be mentioned.
Step A1: A step of polymerizing a non-fluorinated monomer in an aqueous medium to obtain a solution 1 containing the specified polymer.
Step A2: A step of conducting polymerization of TFE in the solution 1 without substantially adding any surfactant to the solution 1 to obtain an aqueous emulsion containing PTFE particles.
Step A3: A step of adding a nonionic surfactant to the aqueous emulsion at a rate of from 10 to 150 mass% to the mass of polytetrafluoroethylene contained in the aqueous emulsion (hereinafter referred to also as "PTFE mass"), and subsequently concentrating the aqueous emulsion to obtain an aqueous PTFE dispersion.
Here, in the first embodiment, the amount of the non-fluorinated monomer used, to the amount of TFE supplied to the polymerization system (hereinafter referred to also as "TFE supplied amount"), is at most 200 mass ppm.
In the following, the present invention will be described in detail with reference to the above preferred embodiment as an example.

<Step A1 >

Step A1 is a step of polymerizing a non-fluorinated monomer in an aqueous medium to obtain a solution 1 containing the specific polymer.

In the following, the materials to be used in step A1 will be first described in detail, followed by a detailed description of the procedure of step A1.

(Non-fluorinated monomer)

A non-fluorinated monomer is a monomer which does not contain fluorine atoms.

The non-fluorinated monomer usually has polymerizable groups, and the number of polymerizable groups is preferably from 1 to 3, more preferably 1.

As the polymerizable group, an ethylenically unsaturated group is preferred. More specifically, an acryloyl group, a methacryloyl group, a vinyl ether group, a vinyl ester group, a vinyl group or an allyl group may be mentioned, and an acryloyl group, a methacryloyl group, a vinyl ester group or a vinyl ether group is preferred.

As the non-fluorinated monomer, a monomer represented by the formula (1) is preferred.

$$\text{Formula (1)} \qquad : CH_2=CR^{11}\text{-}L^1\text{-}R^{12}$$

$R^{11}$ represents a hydrogen atom or an alkyl group. The number of carbon atoms in the alkyl group is preferably from 1 to 3, more preferably 1.

$L^1$ represents a single bond, -CO-O-*, -O-CO-* or -O-. * represents the bonding position with $R^{12}$. For example, in a case where $L^1$ is -CO-O-*, the formula (1) represents $CH_2=CR^{11}\text{-}CO\text{-}O\text{-}R^{12}$.

$R^{12}$ represents a hydrogen atom, an alkyl group, an alkenyl group or a nitrile group. However, in a case where $L^1$ is a single bond, $R^{12}$ is a nitrile group.

The number of carbon atoms in the alkyl and alkenyl groups is preferably from 1 to 10, more preferably from 1 to 6, further preferably from 1 to 4.

The alkyl group may be either chained or cyclic. In a case where the alkyl group is cyclic, it corresponds to a cycloalkyl group.

The alkenyl group may be chained or cyclic.

As the monomer represented by the formula (1), a monomer selected from the group consisting of a monomer represented by the formula (1-1), a monomer represented by the formula (1-2), a monomer represented by the formula (1-3) and a monomer represented by the formula (1-4) is preferred.

$$\text{Formula (1-1)} \qquad : CH_2=CR^{11}\text{-}CO\text{-}O\text{-}R^{13}$$

$$\text{Formula (1-2)} \qquad : CH_2=CR^{11}\text{-}O\text{-}CO\text{-}R^{14}$$

$$\text{Formula (1-3)} \qquad : CH_2=CR^{11}\text{-}O\text{-}R^{15}$$

$$\text{Formula (1-4)} \qquad : CH_2=CR^{11}\text{-}R^{16}$$

The definition of $R^{11}$ is as defined above.

$R^{13}$ represents a hydrogen atom, an alkyl group or an alkenyl group, and a $C_{1-6}$ alkyl group or a $C_{1-6}$ alkenyl group is preferred.

$R^{14}$ represents an alkyl group, and a $C_{1-3}$ alkyl group is preferred, and a methyl group is more preferred.

$R^{15}$ represents an alkyl group, and a linear alkyl group or a cyclic alkyl group is preferred.

$R^{16}$ represents a nitrile group.

As the non-fluorinated monomer, methyl acrylate, methyl methacrylate, ethyl acrylate, ethyl methacrylate, propyl acrylate, propyl methacrylate, butyl acrylate, butyl methacrylate, hexyl methacrylate, cyclohexyl methacrylate, vinyl methacrylate, vinyl acetate, acrylic acid, methacrylic acid, acrylonitrile, methacrylonitrile, ethyl vinyl ether, and cyclohexyl vinyl ether may be mentioned.

As the non-fluorinated monomer, one type may be used alone, or two or more types may be used in combination.

As the non-fluorinated monomer, a monomer represented by the formula (1-1) or a monomer represented by the formula (1-2) is preferred, and a monomer represented by the formula (1-1) in which $R^{13}$ is an alkyl group is more preferred. The monomer represented by the formula (1-1) and the monomer represented by the formula (1-2) have an ester group or carboxy group, which is a water-affinity group, whereby the monomer or its polymer has water affinity. Therefore, especially at a low concentration, the monomer or its polymer is considered to be stably dispersed in an aqueous medium without requiring a surfactant.

(Specific polymer)

The specific polymer is a polymer containing units based on a non-fluorinated monomer.

The specific polymer usually contains only units based on a non-fluorinated monomer, but may also contain units based on a fluorinated monomer within a range that the effects of the invention will not be impaired. In other words, a fluorinated monomer may be used in step A1 in addition to the non-fluorinated monomer. The fluorinated monomer is a monomer having fluorine atoms, and, for example, TFE may be mentioned.

The content of units based on the non-fluorinated monomer in the specific polymer is preferably at least 90 mass%, more preferably at least 95 mass%, to all units of the specific polymer. As the upper limit, 100 mass% may be mentioned.

(Aqueous medium)

As the aqueous medium, for example, water and a mixture of water and a water-soluble organic solvent may be mentioned.

As the water-soluble organic solvent, for example, tert-butanol, propylene glycol, or dipropylene glycol may be mentioned. In the case of a mixture of water and a water-soluble organic solvent, the concentration of the water-soluble organic solvent is preferably at most 10 mass%.

As the aqueous medium, water alone is preferred.

(Polymerization initiator)

In step A1, a polymerization initiator may be used. That is, a polymerization initiator may be used at the time of polymerization of the non-fluorinated monomer.

As the polymerization initiator, a water-soluble radical initiator or a water-soluble redox catalyst is preferred.

As the water-soluble radical initiator, a persulfate such as ammonium persulfate, potassium persulfate, etc., or a water-soluble organic peroxide such as disuccinic acid peroxide, bis-glutaric acid peroxide or tert-butyl hydroperoxide is preferred.

As the water-soluble redox catalyst, a combination of an oxidizing agent such as bromic acid or its salt, chloric acid or its salt, persulfuric acid or its salt, permanganic acid or its salt, hydrogen peroxide, etc., and a reducing agent such as sulfurous acid or its salt, hydrogen sulfite or its salt, thiosulfuric acid or its salt, an organic acid, etc. is preferred. Among them, a combination of bromic acid or its salt, and sulfurous acid or its salt (e.g. ammonium sulfite), or a combination of permanganic acid or its salt (e.g. potassium permanganate), and oxalic acid, is more preferred.

As the polymerization initiator, ammonium persulfate alone, or a mixed system of a persulfate and disuccinic acid peroxide, is preferred, and ammonium persulfate alone, or a mixed system of ammonium persulfate and disuccinic acid peroxide, is more preferred.

As the polymerization initiator, one type may be used alone, or two or more types may be used in combination.

Here, as the method of charging the polymerization initiator, prior to starting the polymerization reaction, its entire amount may be charged in the polymerization system, or it may be added to the polymerization system continuously or intermittently.

(Procedure of step A1)

In step A1, polymerization of a non-fluorinated monomer is carried out in an aqueous medium. Specifically, it is preferred that the non-fluorinated monomer and the aqueous medium are mixed, and polymerization of the non-fluorinated monomer is carried out in the obtained mixed solution.

Here, as mentioned above, a fluorinated monomer may be used in combination as the case requires.

The amount of the non-fluorinated monomer used is at most 200 mass ppm, preferably from 1 to 150 mass ppm, more preferably from 5 to 100 mass ppm, further preferably from 5 to 50 mass ppm, to the amount of TFE supplied (amount of TFE used) to be used in step A2 as described below.

Here, as the method for charging the non-fluorinated monomer, the initial batch addition, in which its entire amount is charged in the polymerization system before initiating the polymerization reaction, is preferred.

The content of the non-fluorinated monomer in the dispersion obtainable by mixing the non-fluorinated monomer and the aqueous medium is preferably from 0.000015 to 0.0030 mass%, more preferably from 0.000075 to 0.0023 mass%, to the entire mass of the dispersion.

The non-fluorinated monomer is usually polymerized in its entire amount to form the specific polymer, whereby the concentration of the specific polymer in the obtained solution 1 will be within the above numerical range.

The above non-fluorinated monomer concentration and specific polymer concentration are the concentrations in a case where the obtained solution 1 is used in step A2 without dilution with an aqueous medium. In a case where the obtained solution 1 is diluted with an aqueous medium to the above specified polymer concentration and the diluted solution is used in step A2, a solution with a high concentration according to the dilution factor in step A1 is produced. The dilution factor is not particularly limited, but at most 10 times is preferred.

The amount of the polymerization initiator used is preferably from 0.2 to 1,000 mass%, more preferably from 0.2 to 500 mass%, to the entire amount of the non-fluorinated monomer.

The amount of the polymerization initiator used is preferably from 0.1 to 1,000 mol%, more preferably from 0.1 to 300 mol%, to the entire amount of the non-fluorinated monomer.

The polymerization temperature for the non-fluorinated monomer is preferably from 10 to 95°C, more preferably from 50 to 90°C. The polymerization time is preferably from 5 to 400 minutes, more preferably from 5 to 300 minutes, further preferably from 5 to 200 minutes.

Pressure conditions at the time of the polymerization are preferably reduced pressure conditions or atmospheric pressure conditions. Among them, from 0 to 2.0 MPa is preferred, from 0 to 1.0 MPa is more preferred, and from 0 to 0.5 MPa is further preferred.

Further, the polymerization may be carried out with the atmosphere at the time of polymerization being a TFE atmosphere. In general, the polymerization of the non-fluorinated monomer in an aqueous medium proceeds in priority over the polymerization of TFE.

By the above-described step A1, a solution 1 containing the specific polymer is obtainable.

The specific polymer may be dissolved in the solution 1 or dispersed in the form of particles in the aqueous medium. At the time of the polymerization of TFE in step A2 as described below, although the specific polymer is not an emulsifier, it is assumed that the specific polymer exists at the boundary of both the aqueous medium and the PTFE particles due to the balance of the interfacial tension for both the aqueous medium and the PTFE particles, and contributes to stabilizing dispersion of the PTFE particles in the aqueous medium.

The particle size of the particles of the specific polymer is preferably from 0.1 to 100 nm, more preferably from 0.1 to 50 nm.

Here, the solution 1 obtainable in step A1 may contain an unreacted non-fluorinated monomer. Further, the atmosphere in the polymerization system in step A1 may be a TFE-containing atmosphere in consideration of step A2. In such a case, it is considered that a part of the specific polymer in step A2 may be a polymer containing TFE units.

Further, from another viewpoint, the PTFE particles obtainable in step A2 are not limited to particles consisting of a physical mixture of the specific polymer and PTFE, but may also be particles containing TFE copolymers having units based on a non-fluorinated monomer.

<Step A2>

Step A2 is a step of conducting polymerization of TFE in the solution 1 obtained in step A1 without substantially adding any surfactant to the solution 1, to obtain an aqueous emulsion containing PTFE particles.

In the following, firstly the materials to be used in step A2 will be described in detail, followed by a detailed description of the procedure of step A2.

(TFE)

In step A2, TFE is used.

(Another monomer)

In step A2, another monomer other than TFE may be further used within such a range that the effects of the present invention will not be impaired.

As another monomer, a monomer having a polar group (hereinafter simply referred to also as a "specific monomer"). Since the polar group in the specific monomer interacts with the aqueous medium, it is assumed that it is positioned between TFE and the aqueous medium at the time of the polymerization of TFE and exhibits a surfactant-like function. As a result, the polymerization of TFE proceeds well and chain migration is suppressed.

As the polar group to be contained in the specific monomer, for example, a sulfonic acid group, a sulfonic acid base, a carboxylic acid group, a carboxylic acid base, a phosphonic acid group or a phosphonic acid base may be mentioned. Among them, from the viewpoint that the formation of fluorinated oligomers is more inhibited, a group represented by the formula (A) or a group represented by the formula (B) is preferred, and a group represented by the formula (A) is more preferred.

Formula (A)  : -SO$_3$M

Formula (B)  : -COOM

In the formula (A) and the formula (B), M represents a hydrogen atom, NH$_4$ or an alkali metal atom. As the alkali metal atom, for example, a lithium atom, a sodium atom or a potassium atom may be mentioned.
The specific monomer usually has polymerizable groups, and the number of polymerizable groups is preferably from 1 to 3, more preferably 1.
As the polymerizable group, an ethylenically unsaturated group is preferred. More specifically, an acryloyl group, a methacryloyl group, a vinyl ether group, a vinyl ester group, a vinyl group or an allyl group may be mentioned, and an acryloyl group, a methacryloyl group, a vinyl ester group or a vinyl ether group is preferred.
As the specific monomer, a monomer represented by the formula (3) is preferred from the viewpoint that the formation of fluorinated oligomers is more suppressed.

Formula (3)  : CR$^{31}$R$^{32}$=CR$^{33}$-L$^3$-R$^{34}$

In the formula (3), R$^{31}$ and R$^{32}$ represent each independently a hydrogen atom or a fluorine atom.
R$^{33}$ represents a hydrogen atom, a fluorine atom, or an alkyl group to which a fluorine atom may be substituted. Among these, a hydrogen atom or a fluorine atom is preferred from such a viewpoint that copolymerizability with TFE is better.
Here, the "alkyl group to which a fluorine atom may be substituted" means an alkyl group in which at least one hydrogen atom in the alkyl group may be substituted with a fluorine atom.
The number of carbon atoms in the alkyl group to which the fluorine atom may be substituted is preferably from 1 to 3, more preferably 1.
L$^3$ represents a single bond or a divalent linkage group. Among them, a single bond is preferred from such a viewpoint that copolymerizability with TFE is better. As the divalent linking group, for example, a divalent hydrocarbon group (a divalent saturated hydrocarbon group, a divalent aromatic hydrocarbon group, an alkenylene group, or an alkynylene group; the divalent saturated hydrocarbon group may be linear, branched or cyclic, for example, an alkylene group; the number of carbon atoms is preferably from 1 to 20; further, the number of carbon atoms in the divalent aromatic hydrocarbon group is preferably from 5 to 20; for example, a phenylene group may be mentioned; otherwise, it may be a C$_{2-20}$ alkenylene group, or a C$_{2-20}$ alkynylene group), a divalent heterocyclic group, -O-, -S-, -SO$_2$-, -C(O)-, -Si(R$^a$)$_2$-, -N(R$^b$)-, and a group having two or more of these combined, may be mentioned. Here, R$^a$ represents an alkyl group (preferably from 1 to 10 carbon atoms) or a phenyl group; R$^b$ represents a hydrogen atom or an alkyl group (preferably from 1 to 10 carbon atoms).
As the group having two or more of these combined, for example, -OC(O)-, -C(O)N(R$^b$)-, an alkylene group-O-alkylene group, an alkylene group-OC(O)-alkylene group, or an alkylene group-Si(R$^a$)$_2$-phenylene group-Si(R$^a$)$_2$ may be mentioned.
Here, the above divalent hydrocarbon group may have substituents. As substituents, for example, halogen atoms (e.g. fluorine atom, chlorine atom) may be mentioned. That is, hydrogen atoms in the above divalent hydrocarbon group may be substituted with halogen atoms.
R$^{34}$ represents a group represented by the above formula (A) or a group represented by the above formula (B).
As the monomer represented by the formula (3), a monomer selected from the group consisting of a monomer represented by the formula (3-1), a monomer represented by the formula (3-2), a monomer represented by the formula (3-3), a monomer represented by the formula (3-4), a monomer represented by the formula (3-5) and a monomer represented by the formula (3-6) is preferred, and a monomer represented by the formula (3-1) is more preferred.

Formula (3-1)  : CR$^{31}$R$^{32}$=CR$^{33}$-R$^{34}$

Formula (3-2)  : CR$^{31}$R$^{32}$=CR$^{33}$-(CF$_2$)$_{m1}$-R$^{34}$

Formula (3-3)  : CR$^{31}$R$^{32}$=CR$^{33}$-(CF$_2$C(CF$_3$)F)$_{m2}$-R$^{34}$

Formula (3-4)  : CR$^{31}$R$^{32}$=CR$^{33}$-O-(CFR$^{35}$)$_{m3}$-R$^{34}$

Formula (3-5)  : CR$^{31}$R$^{32}$=CR$^{33}$-O-(CF$_2$CFR$^{35}$O)$_{m4}$-CF$_2$CF$_2$-R$^{34}$

Formula (3-6)  : CR$^{31}$R$^{32}$=CR$^{33}$-CF$_2$-O-(CF(CF$_3$)CF$_2$O)$_{m5}$-CF(CF$_3$)-R$^{34}$

In the formula (3-1) to the formula (3-6), the definitions of $R^{31}$ to $R^{34}$ are as defined above.

In the formula (3-2), m1 represents an integer of from 1 to 10.

In the formula (3-3), m2 represents an integer of from 1 to 5.

In the formula (3-4), m3 represents an integer of from 1 to 10. $R^{35}$ represents a fluorine atom or $CF_3$.

In the formula (3-5), m4 represents an integer of from 1 to 10. The definition of $R^{35}$ is as defined above.

In the formula (3-6), m5 represents 0 or an integer of from 1 to 10.

As a specific example of the specific monomer, ammonium vinyl sulfonate may be mentioned.

As the specific monomer, one type may be used alone, or two or more types may be used in combination.

(Polymerization initiator)

In step A2, a polymerization initiator may be used. That is, a polymerization initiator may be used at the time of the polymerization of TFE.

As the polymerization initiator to be used, a polymerization initiator described in step A1 may be mentioned.

As the polymerization initiator, a mixed system of a persulfate and disuccinic acid peroxide is preferred, and a mixed system of ammonium persulfate and disuccinic acid peroxide is more preferred.

The amount of the polymerization initiator to be used is preferably at least 0.10 mass%, more preferably from 0.10 to 1.5 mass%, further preferably from 0.20 to 1.0 mass%, to the entire amount of TFE to be supplied to the polymerization system.

(Stabilizing aid)

In step A2, a stabilizing aid may be used.

As the stabilizing aid, a paraffin wax, a fluorinated solvent or a silicone oil is preferred, and a paraffin wax is more preferred. The paraffin wax may be liquid, semi-solid or solid at room temperature. Among them, a saturated hydrocarbon with at least 12 carbon atoms is preferred. The melting point of the paraffin wax is preferably from 40 to 65°C, more preferably from 50 and 65°C.

As the stabilizing aid, one type may be used alone, or two or more types may be used in combination.

(Others)

Further, in step A2, monomers other than TFE and the specified monomer may be used within such a range that the effects of the present invention will not be impaired, but the amount of TFE to be used is preferably at least 99.5 mass%, more preferably at least 99.8 mass%, to the total amount of monomers to be used in step A2, from such a viewpoint that various properties of PTFE will be more superior.

(Procedure in step A2)

In step A2, no surfactant is substantially added to the solution 1. That is, in step A2, the polymerization of TFE is carried out in the solution 1 without substantially adding a surfactant anew to the solution 1.

A surfactant is a compound having a hydrophilic group (e.g. a polar group) and a hydrophobic group (e.g. a hydrocarbon group). The definition of the polar group is the same as the definition of the polar group contained in the specific monomer.

As the surfactant, known surfactants may be mentioned, and a nonionic surfactant and an ionic surfactant may be mentioned, and more specifically a hydrocarbon-containing surfactant and a fluorinated surfactant may be mentioned. The definition of the hydrocarbon-containing surfactant is as defined below.

In step A2, it is preferred not to substantially add at least one surfactant selected from the group consisting of a hydrocarbon-containing surfactant and a fluorinated surfactant, to the solution 1.

The above "not substantially add" means that no surfactant is added, or even if a surfactant is added, the amount of the surfactant to be added is at most 200 mass ppm to the entire mass of the solution 1. The lower limit is not particularly limited, but 0 mass ppm is preferred. That is, in step A2, it is preferred not to add a surfactant to the solution 1.

TFE is supplied to the polymerization system (i.e. the polymerization reaction vessel) in the usual way. For example, TFE is continuously or intermittently supplied to the polymerization system so that the polymerization pressure becomes to be a predetermined pressure.

In a case where a polymerization initiator is used, the polymerization initiator may be added to the polymerization system in a batch or in installments.

In a case where the specific monomer is used, the amount of the specific monomer to be used to the entire amount of TFE is preferably at most 0.150 mass%. That is, the amount of the specific monomer to be charged to the entire amount of TFE to be charged, is preferably at most 0.150 mass%.

From the viewpoint of stability of the emulsion during the polymerization, the amount of the specific monomer to be used to the entire amount of TFE is preferably at most 0.100 mass%, more preferably at most 0.090 mass%. Further, from the viewpoint of improving the molecular weight, the amount of the specific monomer to be used to the entire amount of TFE is preferably at least 0.005 mass%, more preferably at least 0.010 mass%.

Further, in a case where two or more specific monomers are to be used, the total amount of the specific monomers to be used may be within the above range.

In a case where the specific monomer is to be used, the amount of the specific monomer to be used to the entire amount of TFE is preferably at most 0.150 mol%. That is, the amount of the specific monomer to be charged to the entire amount of TFE to be charged, is preferably at most 0.150 mol%.

From the viewpoint of stability of the emulsion during the polymerization, the amount of the specific monomer to be used to the entire amount of TFE is preferably at most 0.100 mol%, more preferably at most 0.090 mol%. Further, from the viewpoint of improving the molecular weight, the amount of the specific monomer to be used to the entire amount of TFE is preferably at least 0.001 mol%, more preferably at least 0.005 mol%.

Further, in a case where two or more specific monomers are to be used, the total amount of the specific monomers to be used may be within the above range.

The polymerization temperature is preferably from 10 to 95°C, more preferably from 15 to 90°C. The polymerization pressure is preferably from 0.5 to 4.0 MPa, more preferably from 0.6 to 3.5 MPa. The polymerization time is preferably from 50 to 520 minutes, more preferably from 50 to 450 minutes, further preferably from 50 to 300 minutes.

Further, step A1 and step A2 may be conducted continuously in the same polymerization reaction vessel.

Furthermore, in the production method of the present invention, the specific polymer is only required to be formed in step A1, and step A2 may be conducted before the non-fluorinated monomer is completely consumed in step A1.

By the above procedure, an aqueous emulsion in which PTFE is dispersed in particulate form (aqueous emulsion containing PTFE particles) is obtainable. The concentration of PTFE particles in the aqueous emulsion is preferably from 10 to 45 mass%, more preferably from 10 to 30 mass%, further preferably from 10 to 25 mass%, to the entire amount of the aqueous emulsion. Within the above range, PTFE particles in the aqueous emulsion can be more easily coagulated and cloudiness of the coagulated solution can be suppressed.

The average primary particle diameter of PTFE particles is preferably from 100 to 500 nm, more preferably from 150 to 300 nm.

The average primary particle diameter of PTFE particles corresponds to D50 as measured by a laser scattering particle size distribution analyzer.

PTFE in PTFE particles obtained by the above procedure usually contains TFE units as the main component. The term "main component" is intended to mean that the content of TFE units to the entire units of PTFE is at least 99.700 mass%, preferably at least 99.900 mass%. As the upper limit, 100 mass% may be mentioned.

In a case where PTFE contains units based on the specific monomer, the content of the units based on the specific monomers is preferably from 0.005 to 0.150 mass%, more preferably from 0.010 to 0.100 mass%, to the entire units of PTFE.

In a case where two or more specific monomers are used, the total content of the units based on the respective specific monomers may be within the above range.

In a case where PTFE contains units based on a non-fluorinated monomer, the content of the units based on the non-fluorinated monomer is preferably at most 200 mass ppm, more preferably from 1 to 150 mass ppm, further preferably from 5 to 100 mass ppm, particularly preferably from 5 to 50 mass ppm, to the entire units of PTFE.

In a case where two or more non-fluorinated monomers are used, the total content of units based on the respective non-fluorinated monomers may be within the above range.

<Step A3>

Step A3 is a step of adding a nonionic surfactant to the aqueous emulsion obtained in step A2 at a rate of from 10 to 150 mass% to the mass of PTFE contained in the aqueous emulsion, and subsequently concentrating the aqueous emulsion to obtain an aqueous PTFE dispersion. That is, it is a step of adding a nonionic surfactant to the PTFE low-concentration aqueous dispersion obtained in step A2 (corresponding to the above aqueous emulsion), and subsequently concentrating the PTFE low-concentration aqueous dispersion to obtain a PTFE high-concentration aqueous dispersion (corresponding to the above aqueous PTFE dispersion). By carrying out step A3, a aqueous PTFE dispersion exhibiting a PTFE particle concentration higher than the PTFE particle concentration of the aqueous dispersion is obtainable.

Here, the entire amount of the aqueous emulsion obtained in step A2 may be supplied to step A3, or a portion of the aqueous emulsion obtained in step A2 may be supplied to step A3. In either case, the nonionic surfactant is added at a rate of from 10 to 150 mass% to the mass of PTFE contained in the aqueous emulsion to be supplied to step A3.

If the amount of the nonionic surfactant added is less than 10 mass% to the mass of PTFE contained in the aqueous emulsion to be provided in step A3, the PTFE low-concentration aqueous dispersion cannot be concentrated, and a PTFE high-concentration aqueous dispersion cannot be obtained. The amount of the nonionic surfactant to be added is preferably at least 20 mass%, more preferably at least 21 mass%, further preferably at least 22 mass%, still further preferably at least 30 mass%, particularly preferably at least 50 mass%, to the mass of PTFE contained in the aqueous emulsion to be supplied in step A3.

If the amount of the nonionic surfactant to be added is more than 150 mass% to the mass of PTFE contained in the aqueous emulsion to be supplied in step A3, there will be such a problem that the aqueous emulsion will condense and the PTFE low-concentration aqueous dispersion cannot be concentrated, or the viscosity of the aqueous PTFE dispersion will increase and CFT of the coating film to be formed will decrease. The amount of the nonionic surfactant to be added is preferably at most 120 mass%, more preferably at most 130 mass%, to the mass of PTFE contained in the aqueous emulsion to be supplied in step A3.

In the following, the materials to be used in step A3 will be first described in detail, followed by a detailed description of the procedure in step A3.

(Nonionic surfactant)

As the nonionic surfactant, a nonionic surfactant may be mentioned.

As the nonionic surfactant, a nonionic surfactant represented by the formula (4) or a nonionic surfactant represented by the formula (5) is preferred.

Formula (4) $\quad : R^{41}\text{-}O\text{-}A\text{-}H$

Formula (5) $\quad : R^{51}\text{-}C_6H_4\text{-}O\text{-}B\text{-}H$

In the formula, $R^{41}$ represents a $C_{8\text{-}18}$ alkyl group. A represents a polyoxyalkylene chain consisting of from 5 to 20 oxyethylene groups and from 0 to 2 oxypropylene groups.

In the formula, $R^{51}$ represents a $C_{4\text{-}12}$ alkyl group. B represents a polyoxyethylene chain consisting of from 5 to 20 oxyethylene groups.

Further, as the nonionic surfactant, a nonionic surfactant represented by the formula (6) is also preferred.

Formula (6) $\quad : R^{61}\text{-}O\text{-}D\text{-}H$

In the formula, $R^{61}$ represents a $C_{8\text{-}18}$ alkyl group. D represents a polyoxyalkylene chain consisting of from 5 to 20 oxyethylene groups and from 0.1 to 3 oxybutylene groups.

In the formula (4), the number of carbon atoms in the alkyl group represented by $R^{41}$ is from 8 to 18, preferably from 10 to 16, more preferably from 12 to 16. When the number of carbon atoms is at most 18, the PTFE particles are less likely to settle even when the aqueous PTFE dispersion is left to stand still for a long period of time, and the storage stability is excellent. When the number of carbon atoms is at least 8, the surface tension of the aqueous PTFE dispersion is low, and it is excellent in permeability and wettability.

In the formula (4), as A being a hydrophilic group, a polyoxyalkylene chain consisting of from 7 to 12 oxyethylene groups and from 0 to 2 oxypropylene groups, is preferred. In particular, when the number of oxypropylene groups in A is from 0.5 to 1.5, the foam-dissipating property is good, such being preferred.

In the formula (5), the number of carbon atoms in the alkyl group represented by $R^{51}$ is from 4 to 12, preferably from 6 to 10, more preferably from 8 to 9. When the number of carbon atoms in the alkyl group is at least 4, the surface tension of the aqueous PTFE dispersion becomes low, and penetration and wettability become excellent. When the number of carbon atoms is at most 12, the PTFE particles do not settle easily even if the aqueous PTFE dispersion is left to stand still for a long period of time, and the storage stability is excellent.

In the formula (5), the number of oxyethylene groups in B as a hydrophilic group, is from 6 to 16, more preferably from 7 to 12.

In the formula (6), the number of carbon atoms in the alkyl group represented by $R^{61}$ is from 8 to 18, preferably from 10 to 16, more preferably from 12 to 16. When the number of carbon atoms is at least 18, the PTFE particles are less likely to settle even when the aqueous PTFE dispersion is left to stand still for a long period of time, and the storage stability is excellent. When the number of carbon atoms is at least 8, the surface tension of the aqueous PTFE dispersion becomes low, and it has excellent permeability and wettability.

In the formula (6), as D being a hydrophilic group, a polyoxyalkylene chain with from 7 to 12 oxyethylene groups and from 0.1 to 3 oxybutylene groups, is preferred. In particular, when the number of oxybutylene groups in D is from 0.5 to 2, the foam-dissipating property is good, such being preferred. Further, the number of oxybutylene groups is more preferably from 0.7 to 1.7, further preferably from 0.9 to 1.5. The number of oxyethylene groups is preferably from 6 to 15, more preferably from 7 to 12.

The average molecular weight of the nonionic surfactant represented by the formula (4), the average molecular weight of the nonionic surfactant represented by the formula (5), and the average molecular weight of the nonionic surfactant represented by the formula (6) are each preferably from 450 to 800, more preferably from 500 to 750, further preferably from 550 to 700.

As the nonionic surfactant represented by the formula (4), for example, $C_{13}H_{27}$-$(OC_2H_4)_{10}$-OH, $C_{12}H_{25}$-$(OC_2H_4)_{10}$-OH, $C_{10}H_{21}CH(CH_3)CH_2$-$(OC_2H_4)_9$-OH, $C_{13}H_{27}$-$(OC_2H_4)_9$-$OCH(CH_3)CH_2$-OH, $C_{16}H_{33}$-$(OC_2H_4)_{10}$-OH, or $HC(C_5H_{11})(C_7H_{15})$-$(OC_2H_4)_9$-OH may be mentioned. As commercially available products, the Tergitol (registered trademark) 15S series and Tergitol (registered trademark) TMN series manufactured by Dow Chemical Company, the Genapol (registered trademark) X series manufactured by Clariant, the Leocol (registered trademark) TD series and Lionol (registered trademark) TDL series manufactured by Lion Specialty Chemicals Co., Ltd., and the Newcol (registered trademark) series manufactured by Nippon Nyukazai Co., Ltd, may be mentioned.

As the nonionic surfactant represented by the formula (5), for example, $C_8H_{17}$-$C_6H_4$-$(OC_2H_4)_{10}$-OH, or $C_9H_{19}$-$C_6H_4$-$(OC_2H_4)_{10}$-OH may be mentioned. As commercially available products, the Triton (registered trademark) X series manufactured by Dow Chemical Company, and the Nikkol (registered trademark) OP series or NP series manufactured by Nikko Chemicals Co., Ltd. may be mentioned.

As the nonionic surfactant represented by the formula (6), for example, $C_{13}H_{27}OCH_2CH(C_2H_5)O(C_2H_4O)_8H$, $C_{10}H_{21}CH(CH_3)CH_2OCH_2CH(C_2H_5)O(C_2H_4O)_8H$, $C_{12}H_{25}OCH_2CH(C_2H_5)O(C_2H_4O)_8H$, $C_8H_{17}OCH_2CH(C_2H_5)O(C_2H_4O)_{10}H$, $C_{13}H_{27}OCH_2CH_2OCH_2CH(C_2H_5)O(C_2H_4O)_8H$, $C_{10}H_{21}CH(CH_3)CH_2O(C_2H_4O)_9CH_2CH(C_2H_5)OH$, $C_{16}H_{33}OC_2H_4OCH(C_2H_5)CH_2O(C_2H_4O)_9H$, $C_{12}H_{25}OCH_2CH(C_2H_5)O(C_2H_4O)_8CH_2CH(C_2H_5)OH$, $C_{13}H_{27}OCH(CH_3)CH(CH_3)O(C_2H_4O)_8H$, $C_{12}H_{25}OCH(CH_3)CH(CH_3)O(C_2H_4O)_8H$, $C_{13}H_{27}O(CH_2)_4O(C_2H_4O)_8H$, or $C_{12}H_{25}O(CH_2)_2CH(CH_3)O(C_2H_4O)_8H$ may be mentioned.

As the nonionic surfactant represented by the formula (4) and/or the nonionic surfactant represented by the formula (5), one type may be used alone, or two or more types may be used in combination.

As the nonionic surfactant represented by the formula (6), one type may be used alone, or two or more types may be used in combination.

Further, the nonionic surfactant represented by the formula (6) and the nonionic surfactant represented by the formula (4) or the nonionic surfactant represented by formula (5) may be used as mixed.

Further, the nonionic surfactant is a mixture of multiple substances with different molecular structures, and the number of carbon atoms in alkyl groups in nonionic surfactants and the number of oxyethylene, oxypropylene and oxybutylene groups in the polyoxyalkylene chain shall be treated as average values. Each number is not limited to an integer.

(Procedure of step A3)

As the method for concentrating the aqueous emulsion, it is preferred to employ a phase separation method.

If polymerization is conducted by using a fluorinated surfactant or a hydrocarbon type surfactant, undesirable water-soluble fluorine compounds will remain. For example, the byproducts in the case of using a hydrocarbon-containing surfactant are water-soluble fluorine oligomers having a structure similar to perfluorooctanoic acid (PFOA) and perfluorooctane sulfonic acid (PFOS), which are substances of environmental concern, and should better be removed to the lower detection limit. Therefore, a removal process by an ion exchange resin becomes to be required. In order to remove byproducts up to the lower detection limit, undesirable water-soluble fluorine compounds must be discharged to the supernatant side through a process of concentration, followed by dilution and re-concentration, which requires a very complicated process, and new equipment investment and complicated operation management therefor. Although undesirable water-soluble fluorine compounds are not detected in an aqueous emulsion obtainable by polymerization without using a fluorinated activator or a hydrocarbon surfactant, when concentration is conducted by an electrophoresis method, due to the ionic species from the remaining initiator residue the current value is likely to rise and cause heat generation, whereby the operation management will be complicated, and it will be difficult to increase the concentration yield.

By using the phase separation method, it is possible to avoid new capital investment, cumbersome processes, and complicated operation management.

The phase separation method is a method in which PTFE particles are heated and further left to stand still for a certain period of time to be precipitated. Specifically, after adding to the aqueous emulsion a nonionic surfactant at a rate of from 10 to 150 mass% (preferably from 21 to 150 mass%, more preferably from 22 to 150 mass%) to the mass of PTFE contained in the aqueous emulsion to be supplied in step A3, the obtained aqueous emulsion is heated at 50 to 100°C (preferably from 60 to 90°C) and further left to stand still for from 1 to 10 hours (preferably from 1 to 5 hours) to let the aqueous emulsion be phase-separated and to recover the lower phase, in which PTFE particles are concentrated, as an aqueous PTFE dispersion.

The aqueous emulsion prior to concentration should not better be subjected to a process using an ion exchange resin or an adsorbent.

The aqueous emulsion prior to concentration should better be adjusted to pH9 to 12, more preferably to pH10 to 12, by an alkaline ionic species such as ammonia.

It is preferred to add, between step A2 and step A3, or at the time of step A3, to the aqueous emulsion an anionic surfactant (e.g. ammonium laurate, triethanolamine laurate, sodium lauryl sulfate, ammonium lauryl sulfate, triethanolamine lauryl sulfate, etc.) at a rate of from 1,000 to 5,000 mass ppm to the mass of PTFE contained in the aqueous emulsion to be supplied to step A3.

When the above-mentioned amount of addition is at least 1,000 mass ppm, agglomerates during concentration can be reduced more. When the above-mentioned amount of addition is at most 5,000 mass ppm, coloration after processing and firing of the coating film obtainable by using the aqueous PTFE dispersion is suppressed. The amount of the above anionic surfactant to be added to the aqueous emulsion is more preferably from 1,000 to 3,000 mass ppm, further preferably from 1,000 to 2,500 mass ppm, particularly preferably from 1,500 to 2,500 mass ppm.

The concentration of PTFE particles in the aqueous PTFE dispersion obtainable by the above procedure is preferably from 15 to 75 mass% (specific gravity value: 1.09 to 1.74), more preferably from 20 to 75 mass% (specific gravity value: 1.13 to 1.74), further preferably from 30 to 75 mass% (specific gravity value: 1.20 to 1.74), particularly preferably from 40 to 75 mass% (specific gravity value: 1.29 to 1.74), to the entire mass of the aqueous PTFE dispersion. The aqueous PTFE dispersion in which the concentration of PTFE particles is from 15 to 70 mass% can be suitably used in applications for impregnating woven cloth or string made of fibers such as glass fibers with the aqueous PTFE dispersion, in applications for mixing with inorganic powder or plastic powder, and in applications for adding in a small amount to paints.

In particular, in applications for coating the aqueous PTFE dispersion or in applications for processing PTFE fibers, the concentration of PTFE particles is preferably from 50 to 75 mass% (specific gravity value: 1.39 to 1.74), more preferably from 52 to 75 mass% (specific gravity value: 1.41 to 1.74), further preferably from 55 to 75 mass% (specific gravity value: 1.45 to 1.74), particularly preferably from 55 to 70 mass% (specific gravity value: 1.45 to 1.66).

The pH of the aqueous PTFE dispersion is preferably from 2 to 13, more preferably from 3 to 11.

PTFE constituting PTFE particles in the aqueous PTFE dispersion includes not only a homopolymer of TFE, but also so-called modified PTFE containing polymer units based on copolymerization components copolymerizable with TFE, such as a halogenated ethylene such as chlorotrifluoroethylene, a halogenated propylene such as hexafluoropropylene, and a fluorovinyl ether such as perfluoro(alkyl vinyl ether) in a very small amount at such a level as substantially not melt-processable.

The surface tension of the aqueous PTFE dispersion is preferably from 24 to 35 mN/m, more preferably from 25 to 32 mN/m. When the surface tension is at least 24 mN/m, the foam-dissipating property is excellent, and when the surface tension is at most 35 mN/m, blistering is less likely to occur.

The aqueous PTFE dispersion may contain one or more other components such as non-fluorinated emulsifiers, various leveling agents, preservatives, colorants, fillers, organic solvents, ammonia water, and other known components.

Further, when the aqueous PTFE dispersion contains a polyethylene oxide or polyurethane-based viscosity modifier, the mechanical stability of the aqueous PTFE dispersion is excellent.

The viscosity of the aqueous PTFE dispersion is preferably at most 300 mPa s, more preferably from 3 to 100 mPa s, further preferably from 5 to 50 mPa s, at 23°C, from the viewpoint of ease of application.

The thickening temperature of the aqueous PTFE dispersion is preferably from 30 to 60°C, more preferably from 35 to 55°C, further preferably from 40 to 50°C. When the thickening temperature is within the above range, the viscosity change due to a fluctuation in the application temperature is less likely to occur and blistering is less likely to occur.

<<Second embodiment>>

As the second embodiment of the method for producing an aqueous PTFE dispersion, an embodiment having the following three steps may be mentioned.

Step B1: a step of mixing at least one type of nucleating additive selected from the group consisting of a polyalkylene oxide compound and a hydrocarbon-containing surfactant, and an oxidizing agent, in an aqueous medium to obtain a solution 2.

Step B2: a step of conducting polymerization of TFE in the solution 2 obtained in step B1 without adding any surfactant to the solution 2, to obtain an aqueous emulsion containing PTFE particles.

Step B3: a step of adding a nonionic surfactant to the aqueous emulsion at a rate of from 10 to 150 mass% to the mass of PTFE contained in the aqueous emulsion, and subsequently concentrating the aqueous emulsion, to obtain an aqueous PTFE dispersion.

Here, in the second embodiment, the amount of the nucleating additive to be used is at most 100 mass ppm to the amount of TFE to be supplied.

In the following, the present invention will be described in detail with reference to the above described preferred embodiment as an example.

<Step B1>

Step B1 is a step of mixing at least one type of nucleating additive selected from the group consisting of a polyalkylene oxide compound and a hydrocarbon-containing surfactant, and an oxidizing agent, in an aqueous medium, to obtain a solution 2.

In the following, the materials to be used in step B1 will be first described in detail, followed by a detailed description of the procedure in step B1.

(Polyalkylene oxide compound)

The polyalkylene oxide compound is a compound to form the nucleus (seed) at the time of polymerization of TFE. That is, it corresponds to a nucleating additive.

The polyalkylene oxide compound is a compound containing polyalkylene oxide chains. As the polyalkylene oxide chains, for example, polymethylene oxide chains, polyethylene oxide chains, polypropylene oxide chains, and polytetramethylene oxide chains may be mentioned.

The polyalkylene oxide compound preferably has a surface tension in water in excess of about 40 dyne/cm at a concentration of 1,000 ppm. The above surface tension is more preferably in excess of about 42 dyne/cm, further preferably in excess of about 45 dyne/cm. The above surface tension is preferably at most about 73 dyne/cm.

The number-average molecular weight of the polyalkylene oxide compound is preferably from 50 to 2,000, more preferably from 100 to 1,500, further preferably from 150 to 1,300.

From such a viewpoint that the formation of fluorinated oligomers is more suppressed, as the polyalkylene oxide compound, a compound represented by the formula (2) is preferred.

Formula (2)    : $R^{21}\text{-}(O\text{-}L^2)_n\text{-}O\text{-}R^{22}$

In the formula (2), $R^{21}$ and $R^{22}$ each independently represent a hydrogen atom, an alkyl group, an acryloyl group or a methacryloyl group.

$L^2$ represents a $C_{1-4}$ alkylene group, which may be linear or branched.

n represents from 1 to 50.

As the polyalkylene oxide compound, for example, polyethylene glycol, polyethylene glycol acrylate, polyethylene glycol methacrylate, polyethylene glycol methyl ether, polyethylene glycol dimethyl ether, polyethylene glycol butyl ether, polypropylene glycol, polypropylene glycol acrylate, polypropylene glycol methacrylate, polypropylene glycol dimethacrylate, polypropylene glycol methyl ether, polypropylene glycol dimethyl ether, polypropylene glycol butyl ether, polypropylene glycol dimethacrylate, or polytetramethylene glycol may be mentioned.

As the polyalkylene oxide compound, one type may be used alone, or two or more types may be used in combination.

(Hydrocarbon-containing surfactant)

The hydrocarbon-containing surfactant is a surfactant that contains a hydrocarbon. More specifically, at least some of the monovalent substituents at the carbon atom are hydrogen atoms, and substitution by halogen atoms such as fluorine and chlorine atoms is also possible. In a preferred hydrocarbon-containing surfactant, at least 75%, preferably at least 85%, more preferably at least 95% of the monovalent substituents at the carbon atom are hydrogen atoms.

As the hydrocarbon-containing surfactant, for example, a hydrocarbon surfactant and a siloxane surfactant may be mentioned.

The hydrocarbon surfactant means a surfactant that does not contain silicon atoms and does not contain halogen atoms such as chlorine and fluorine atoms because 100% of the monovalent substituents substituted on carbon atoms are hydrogen atoms.

The siloxane surfactant means a hydrocarbon-containing surfactant having hydrophobic groups containing a siloxane backbone containing a large number of siloxane units.

As the hydrocarbon surfactant, an anionic hydrocarbon surfactant is preferred. The anionic hydrocarbon surfactant refers to a hydrocarbon surfactant having a negatively charged hydrophilic portion such as a carboxylic acid group, a sulfonic acid group, a sulfate group, a phosphonic acid group or phosphoric acid group, and a hydrocarbon portion such as an alkyl group as a hydrophobic portion.

As one example of the anionic hydrocarbon surfactant, a highly branched $C_{10}$ tertiary carboxylic acid, supplied as Versatic (registered trademark) 10 by Resolution Performance Products, may be mentioned.

As another example of the anionic hydrocarbon surfactant, a sodium linear alkyl polyether sulfonate, supplied as the Avanel (registered trademark) S series by BASF, may be mentioned.

As the anionic hydrocarbon surfactant, an anionic hydrocarbon surfactant represented by the formula (7) is also preferred.

Formula (7)　　　　: $R^{71}$-$L^7$-M

$R^{71}$ represents an alkyl group. The alkyl group may be linear, branched or cyclic, and linear is preferred. The number of carbon atoms in the alkyl group may, for example, be from 6 to 20.

$L^7$ represents -$ArSO_3^-$ , -$SO_3^-$ , -$SO_4^-$ , -$PO_3^-$ , -$PO_4^-$ , or -$COO^-$. Here, Ar represents an arylene group.

M represents a monovalent cation. The monovalent cation may, for example, be $H^+$, $Na^+$, $K^+$ or $NH_4^+$.

As the anionic hydrocarbon surfactant represented by the formula (7), for example, sodium dodecyl sulfate may be mentioned.

As another example of the anionic hydrocarbon surfactant, a sulfosuccinate surfactant Lankropol (registered trademark) K8300, available from Akzo Nobel Surface Chemistry LLC., may be mentioned.

As the hydrocarbon surfactant, a nonionic hydrocarbon surfactant is also preferred. The nonionic hydrocarbon surfactant does not have a charged group but has a hydrophobic portion that is often a long-chain hydrocarbon. As the hydrophilic portion of the nonionic hydrocarbon surfactant, a water-soluble functional group such as a polyethylene oxide chain derived from the polymerization of ethylene oxide may be mentioned.

As the nonionic hydrocarbon surfactant, a block copolymer having various types of polyalkylene oxide blocks, e.g. polyethylene oxide and polypropylene oxide, may be mentioned.

As suitable nonionic hydrocarbon surfactants, surfactants disclosed in paragraphs 0043 to 0052 of JP-A-2016-537499 may be mentioned.

As suitable siloxane surfactants, surfactants disclosed in U.S. Patent No. 6,841,616 (Wille et al.) and No. 7,977,438 (Brothers et al.) may be mentioned.

(Oxidizing agent)

As the oxidizing agent, for example, hydrogen peroxide and a polymerization initiator may be mentioned.

As the polymerization initiator, the polymerization initiator described in the above step A1 may be exemplified. As the polymerization initiator, a persulfate is preferred, and ammonium persulfate or potassium persulfate is more preferred.

As the aqueous medium, the aqueous medium to be used in step A1 may be mentioned.

(Procedure of step B1)

In step B1, the nucleating additive and the oxidizing agent are mixed in an aqueous medium to obtain a solution 2. In other words, in this step, the nucleating additive is exposed to the oxidizing agent in an aqueous medium.

When the nucleating additive and the oxidizing agent are mixed in an aqueous medium, a solution in which the lipophilic nucleating moieties are dispersed in the aqueous medium is obtainable. More specifically, when the nucleating additive such as a polyalkylene oxide compound and a hydrocarbon-containing surfactant, and the oxidizing agent, are mixed, the hydrophilic portion of the nucleating additive will be decomposed and the hydrophobic portion of the nucleating additive becomes a lipophilic nucleating moiety. The lipophilic nucleating moieties are dispersed in the aqueous medium, whereby it becomes possible to finely disperse the fluoropolymer at these moieties.

Since the lipophilic nucleating moieties have excellent affinity with TFE, polymerization of TFE can easily proceed in the solution 2 containing the lipophilic nucleating moieties. That is, the lipophilic nucleating moieties can be the sites of hydrophobic environment for polymerization of TFE.

The amount of the nucleating additive to be used is at most 100 mass ppm, preferably from 1 to 50 mass ppm, more preferably from 1 to 25 mass ppm, to the amount of TFE to be supplied (amount of TFE to be used) in step B2 as will be described below.

The amount of the oxidizing agent to be used is preferably from 0.5 to 100 mass ppm, more preferably from 0.5 to 50 mass ppm, to the entire mass of the aqueous medium.

The temperature at the time of mixing the nucleating additive and the oxidizing agent is preferably from 20 to 120°C, more preferably from 40 to 120°C.

The mixing time at the time of mixing the nucleating additive and the oxidizing agent is preferably from 0.05 to 1.0 hour.

It is preferred to add a water-soluble inorganic salt to the aqueous medium before or during mixing of the nucleating additive and the oxidizing agent. The addition of the water-soluble inorganic salt is useful in increasing the number of fluoropolymer particles formed during nucleation.

The amount of the water-soluble inorganic salt to be used is preferably from 0.01 to 80 mass ppm, more preferably from 1 to 50 mass ppm, to the entire mass of the aqueous medium.

As the water-soluble inorganic salt, for example, sodium sulfite, sodium hydrogen sulfite, sodium chloride, potassium sulfite, potassium hydrogen sulfite, potassium carbonate, ammonium oxalate, sodium tetraborate, sodium acetate, ammonium carbonate, ammonium dihydrogen phosphate, or ammonium phosphate may be mentioned, and a sulfite is preferred, and sodium sulfite or ammonium sulfite is more preferred.

<Step B2>

Step B2 is a step of conducting polymerization of TFE in the solution 2 obtained in step B1 without substantially adding any surfactant to the solution 2, to obtain an aqueous emulsion containing PTFE particles.

In this step, the same procedure as in the above-described step A2 is conducted except that the solution 2 is used instead of the solution 1, and therefore, the description of this step is omitted.

Various properties of PTFE obtainable by step B2 are as described in the various properties of PTFE obtainable by step A2.

The above "without substantially adding" means that no surfactant is added, or even if a surfactant is added, the amount of the surfactant added is at most 200 mass ppm to the entire mass of the solution 2. The lower limit is not particularly limited, but 0 mass ppm is preferred. That is, it is preferred that no surfactant be added to the solution 2 in step B2.

<Step B3>

Step B3 is a step of adding a nonionic surfactant to the aqueous emulsion obtained in step B2 at a rate of from 10 to 150 mass% to the mass of PTFE contained in the aqueous emulsion, and subsequently concentrating the aqueous emulsion, to obtain an aqueous PTFE dispersion. That is, it is a step of adding a nonionic surfactant to the PTFE low-concentration aqueous dispersion obtained in step B2 (corresponding to the above aqueous emulsion), and subsequently concentrating the PTFE low-concentration aqueous dispersion to obtain a PTFE high-concentration aqueous dispersion (corresponding to the above aqueous PTFE dispersion). By carrying out step B3, an aqueous PTFE dispersion exhibiting a PTFE particle concentration higher than the PTFE particle concentration of the aqueous dispersion is obtainable.

Here, the entire amount of the aqueous emulsion obtained in step B2 may be supplied to step B3, or a portion of the aqueous emulsion obtained in step B2 may be supplied to step B3. In either case, the nonionic surfactant is added at a rate of from 10 to 150 mass% to the mass of PTFE contained in the aqueous emulsion.

In this step, the same procedure as in the above step A3 is conducted except that the aqueous emulsion obtained in step B2 is used instead of the aqueous emulsion obtained in step A2, and therefore, its description is omitted.

Here, also in step B3, it is preferred to use the phase separation method as the method for concentrating the aqueous emulsion.

Various properties of the aqueous PTFE dispersion obtainable by step B3 are as described in the various properties of the aqueous PTFE dispersion obtainable by step A3.

Between step B2 and step B3, it is preferred to add an anionic surfactant (e.g. ammonium laurate, triethanolamine laurate, sodium lauryl sulfate, ammonium lauryl sulfate, triethanolamine lauryl sulfate, etc.) to the aqueous emulsion at a rate of from 1,000 to 5,000 mass ppm to the mass of PTFE contained in the aqueous emulsion to be supplied to step B3.

When the above-mentioned amount of addition is at least 1,000 mass ppm, agglomerates during concentration can be reduced more. Further, when the above-mentioned amount of addition is at most 5,000 mass ppm, coloration after processing and firing of the coating film obtainable by using the aqueous PTFE dispersion is suppressed. The amount of the above anionic surfactant to be added to the aqueous emulsion is more preferably from 1,000 to 3,000 mass ppm, further preferably from 1,000 to 2,500 mass ppm, particularly preferably from 1,500 to 2,500 mass ppm.

<<Third embodiment>>

As the third embodiment of the method for producing an aqueous PTFE dispersion, an embodiment having the following two steps may be mentioned.

Step C1: a step of conducting polymerization of TEF in the presence of a polyalkylene oxide compound in an aqueous medium, without substantially adding any surfactant, to obtain an aqueous emulsion containing PTFE particles.

Step C2: a step of adding a nonionic surfactant to the aqueous emulsion at a rate of from 10 to 150 mass% to the mass of PTFE contained in the aqueous emulsion, and subsequently concentrating the aqueous emulsion, to obtain an aqueous PTFE dispersion.

Here, in the third embodiment, the amount of the polyalkylene oxide compound to be used to the amount of TFE to be supplied, is at most 100 mass ppm.

<Step C1>

Step C1 is a step of conducting polymerization of TEF in the presence of a polyalkylene oxide compound in an aqueous medium, without substantially adding any surfactant, to obtain an aqueous emulsion containing PTFE particles.

In the following, the materials to be used in step C1 will be first described in detail.

(Polyalkylene oxide compound)

The polyalkylene oxide compound is a compound containing polyalkylene oxide chains. As the polyalkylene oxide chains, for example, polymethylene oxide chains, polyethylene oxide chains, polypropylene oxide chains, or polytetramethylene oxide chains may be mentioned.

The polyalkylene oxide compound preferably has a surface tension in water in excess of about 40 dyne/cm at a concentration of 1,000 mass ppm. The above surface tension is more preferably in excess of about 42 dyne/cm, further preferably in excess of about 45 dyne/cm. The above surface tension is preferably at most about 73 dyne/cm.

The number-average molecular weight of the polyalkylene oxide compound is preferably from 300 to 10,000,000, more preferably from 400 to 10,000,000, further preferably from 400 to 5,000,000, still further preferably from 3,000 to 5,000,000, particularly preferably from 200,000 to 5,000,000. When the number-average molecular weight of the polyalkylene oxide compound is within the above range, the polymerization rate is faster, and the emulsion stability is better.

As the polyalkylene oxide compound, for example, polyethylene glycol, polyethylene glycol acrylate, polyethylene glycol methacrylate, polyethylene glycol methyl ether, polyethylene glycol dimethyl ether, polyethylene glycol butyl ether, polypropylene glycol, polypropylene glycol acrylate, polypropylene glycol methacrylate, polypropylene glycol dimethacrylate, polypropylene glycol methyl ether, polypropylene glycol dimethyl ether, polypropylene glycol butyl ether, polypropylene glycol dimethacrylate, or polytetramethylene glycol may be mentioned.

As the polyalkylene oxide compound, one type may be used alone, or two or more types may be used in combination.

The amount of the polyalkylene oxide compound to be used is at most 100 mass ppm, more preferably from 1 to 80 mass ppm, more preferably from 1 to 50 mass ppm, to the amount of TFE to be supplied (amount of TFE to be used).

Here, in a case where the number-average molecular weight of the polyalkylene oxide compound is high, e.g. from 200,000 to 5,000,000, the amount of the polyalkylene oxide compound to be used is preferably from 1 to 50 mass ppm, more preferably from 1 to 25 mass ppm, to the amount of TFE to be supplied (amount of TFE to be used).

As the aqueous medium, the aqueous medium to be used in step A1 may be mentioned.

For the polymerization of TFE in this step, the same procedure as in the above-described step A2 is conducted except that instead of the solution 1, a solution having a polyalkylene oxide compound mixed in an aqueous medium, is used, and therefore, the description of this step is omitted.

Since the etheric oxygen of the polyalkylene oxide shows interaction against the aqueous medium, it is assumed to exhibit a surfactant-like function as it is located between TFE and the aqueous medium at the time of polymerization of TFE. As a result, polymerization of TFE proceeds well and, at the same time, generation of chain migration is suppressed.

Various properties of PTFE obtainable by step C1 are as described in various properties of PTFE obtainable by step A2.

<Step C2>

Step C2 is a step of adding a nonionic surfactant to the aqueous emulsion obtained in step C1 at a rate of from 10 to 150 mass% to the mass of PTFE contained in the aqueous emulsion, and subsequently concentrating the aqueous emulsion, to obtain an aqueous PTFE dispersion. That is, it is a step of adding a nonionic surfactant to the PTFE low-concentration aqueous dispersion obtained in step C1 (corresponding to the above aqueous emulsion), and subsequently concentrating the PTFE low-concentration aqueous dispersion, to obtain a PTFE high-concentration aqueous dispersion (corresponding to the above aqueous PTFE dispersion). By carrying out step C2, an aqueous PTFE dispersion exhibiting a PTFE particle concentration higher than the PTFE particle concentration of the aqueous dispersion is obtainable.

Here, the entire amount of the aqueous emulsion obtained in step C1 may be supplied to step C2, or a portion of the aqueous emulsion obtained in step C1 may be supplied to step C2. In either case, the nonionic surfactant is added at a rate of from 10 to 150 mass% to the mass of PTFE contained in the aqueous emulsion to be supplied to step C2.

In this step, the same procedure as in the above-described step A3 is conducted except that the aqueous emulsion obtained in step C1 is used instead of the aqueous emulsion obtained in step A2, and therefore, the description of this step is omitted.

Here, also in step C2, it is preferred to use a phase separation method as the method for concentrating the aqueous emulsion.

Various properties of the aqueous PTFE dispersion obtainable by step C2 are as described in various properties of the aqueous PTFE dispersion obtainable by step A3.

It is preferred to add, between step C2 and step C3, or during step C3, an anionic surfactant (e.g. ammonium laurate, triethanolamine laurate, sodium lauryl sulfate, ammonium lauryl sulfate, triethanolamine lauryl sulfate, etc.) to the aqueous emulsion at a rate of from 1,000 to 5,000 mass ppm to the mass of PTFE contained in the aqueous emulsion.

When the above amount of addition is at least 1,000 mass ppm, agglomerates during concentration can be more reduced. Further, when the above amount of addition is at most 5,000 mass ppm, coloration after processing and firing of the coating film obtainable by using the aqueous PTFE dispersion is suppressed. The amount of the above anionic surfactant to be added to the aqueous emulsion is more preferably from 1,000 to 3,000 mass ppm, further preferably from 1,000 to 2,500 mass ppm, particularly preferably from 1,500 to 2,500 mass ppm.

«PTFE products»

PTFE products mean films, sheets and fibers made mainly of PTFE, heat-resistant articles having a PTFE coating film, and articles containing PTFE as a sub-component, which are obtainable by using the aqueous PTFE dispersion.

PTFE products include, for example, packing made by impregnating a base material made of woven cloth or braided cord of glass fiber, aramid fiber, carbon fiber, and various other synthetic or natural fibers with the aqueous PTFE dispersion and drying it; heat-resistant belts, architectural membrane structure sheets, packing and printed circuit board materials made by baking a base material made of woven cloth or braided cord of glass fiber, aramid fiber, carbon fiber, and other heat-resistant fibers impregnated with the aqueous PTFE dispersion, at a temperature of at least the melting point of PTFE; kitchen equipment such as frying pans and electric kettles made by coating the aqueous PTFE dispersion blended with a pigment and a heat-resistant resin on a metal plate such as aluminum or stainless steel, followed by baking; binders made by kneading active material powders for batteries such as carbon, manganese dioxide and nickel hydroxide, and the aqueous PTFE dispersion; raw materials for molding and molded products (anti-dripping agents) having the aqueous PTFE dispersion mixed to prevent dripping at the time of burning plastic molded products such as polycarbonate and ABS resin; powders having dust emission reduced by mixing the aqueous PTFE dispersion to e.g. chemical fertilizers, lime, incinerated ash, etc.; a sliding material for oilless bearings, etc. made by coating on a porous material a mixture having a filler such as lead, zinc, carbon powder, etc. and the aqueous PTFE dispersion mixed and formed into a paste; PTFE fibers produced by adding a thickening agent such as viscose to the aqueous PTFE dispersion, pressurizing and spinning it in a solidification bath, and then baking it; PTFE ultra-thin sheets obtainable by coating heat-resistant sheet base materials such as aluminum and stainless steel plates with the aqueous PTFE dispersion, baking it, and then peeling off the PTFE layer; coil insulation, interlaminar insulation films and electrical insulation materials to be used for motors, transformers, relays, switches, etc., which are thin films having heat-resistance, high insulation properties and low dielectric loss tangent, obtainable by cast film forming from the aqueous PTFE dispersion; and paint, resin and rubber materials having lubricity and antifouling properties improved by adding the aqueous PTFE dispersion.

PTFE products are obtainable by coating or mixing the aqueous PTFE dispersion, followed by drying or heat treatment at a temperature of from room temperature to 420°C. The temperature for the above drying or heat treatment is preferably from 50 to 400°C, more preferably from 100 to 395°C.

The PTFE content in the PTFE products varies depending on the application, but from 0.01 to 100 mass% is preferred, from 0.1 to 100 mass% is more preferred, and from 1 to 100 mass% is further preferred.

EXAMPLES

In the following, the present invention will be described in more detail by means of Examples and Comparative Examples, but the present invention is not limited to these. Ex. 1 to 10 are all Examples of the present invention.

Various measurement methods and evaluation methods are as follows. (A) Average primary particle size of PTFE particles (hereinafter referred to also as "PPS")

The aqueous PTFE dispersion was used as a sample and measured by using a laser scattering particle size distribution analyzer (product name "LA-920" manufactured by HORIBA, Ltd.).

(B) Standard specific gravity (hereinafter referred to also as "SSG")

Measured in accordance with ASTM D4895-04.

12.0 g of the sample (PTFE powder) was weighed and held at 34.5 MPa for 2 minutes in a cylindrical mold with an inner diameter of 28.6 mm. This was put in a 290°C oven, and the temperature was increased at 120°C/hr. It was further held at 380°C for 30 minutes, then the temperature was lowered at 60°C/hr and held at 294°C for 24 minutes. After the sample was kept in a desiccator at 23°C for 12 hours, the specific gravity value of the sample to water at 23°C was measured and used as the standard specific gravity. The smaller the SSG value, the larger the molecular weight.

(C) PTFE concentration and surfactant concentration

The PTFE concentration and surfactant concentration (ratio of the surfactant to the amount of TFE supplied) were determined from the following formulas, by putting approximately 7 g of the aqueous PTFE dispersion in an aluminum dish (mass W0) and weighing it (mass W1), and from the mass (mass W2) after drying at 120°C for 1 hour, and the mass (mass W3) after drying at 380°C for 35 minutes.

$$\text{PTFE concentration (mass\%)} = [(W3-W0)/(W1-W0)] \times 100$$

$$\text{Surfactant concentration (mass\%/PTFE)} = [(W2-W3)/(W3-W0)] \times 100$$

(D) Viscosity

The viscosity of the aqueous PTFE dispersion was measured by a Brookfield viscometer using a #1 spindle at a liquid temperature of 23°C and 60 rpm.

(E) pH

The pH of the aqueous PTFE dispersion was measured by the glass electrode method.

(F) Surface tension

The surface tension of the aqueous PTFE dispersion was measured by the du Nouy ring method using a platinum wire ring.

(G) CFT (crack critical film thickness)

Using an applicator that continuously changes the coating thickness up to 200 $\mu$m, the aqueous PTFE dispersion was applied to a 0.5 mm thick aluminum plate, dried at 120°C for 10 minutes, and baked at 380°C for 10 minutes.

The PTFE coating film was observed, and the thickness at the tip of the cracks that occurred was measured at five points by a permascope, and the average value ($\mu$m) was determined and adopted as CFT (crack critical film thickness).

(H) Measurement of fluorinated oligomers

Soxhlet extraction with ethanol was conducted on the sample (PTFE powder) for 5 hours, and LC/MS analysis was carried out on the ethanol extract to quantify oligomers in the $CF_2$ chain mainly with from 6 to 34 carbon atoms, using perfluorooctyl sulfonic acid and perfluorooctanoic acid as standard samples. A case where the presence of oligomers was confirmed, was identified to be "Present", and a case where the presence was not confirmed was identified to be "Absent".

Here, in the LC/MS analysis, Agilent 1260 series HPLC/6460MS was used, and as the column, Imtakt cadenza CD-C18 2mm$\varphi\times$100mm 3$\mu$m particle size, was used. Further, a gradient of ammonium acetate solution and methanol was applied for the measurement.

(Ex. 1)

[Step A1]

Into a 100 L stainless steel autoclave, paraffin wax (1,500 g) and deionized water (60 L) were charged. After replacing the autoclave with nitrogen, the pressure was reduced, and i-butyl methacrylate (i-BMA) (0.25 g) and deionized water (0.5 L) were poured and charged into the autoclave.

Next, by adjusting the inside of the autoclave to be at most the atmospheric pressure, the temperature was raised to 75°C while stirring the solution in the autoclave. Then, a solution having ammonium persulfate (0.055 g) as a polymerization initiator dissolved in deionized water (1 L), was injected into the autoclave to polymerize i-butyl methacrylate.

[Step A2]

After 20 minutes, the autoclave was pressurized to 1.96 MPa with TFE, and a solution having ammonium persulfate (0.54 g) and disuccinic acid peroxide (concentration 80 mass%, rest being water) (53 g) dissolved in warm water (1 L) of about 70°C, was injected into the autoclave.

After the internal pressure in the autoclave dropped to 1.89 MPa, TFE was added to keep the pressure at 1.96 MPa to let the polymerization of TFE proceed.

When the amount of TFE added reached 9 kg, the reaction was terminated, and TFE in the autoclave was released to the atmosphere. The polymerization time was 88 minutes.

The solid content concentration (concentration of PTFE particles) of the aqueous emulsion was about 12 mass%. Further, the average primary particle diameter of the PTFE particles in the aqueous emulsion was 0.206 $\mu$m (206 nm).

A portion of the obtained aqueous emulsion was adjusted to 20°C and stirred to agglomerate the PTFE particles to obtain PTFE powder. Then, the PTFE powder was dried at 275°C together with an ammonium carbonate aqueous solution. SSG of the obtained PTFE powder was 2.202.

Further, no by-product fluorinated oligomers were confirmed in the obtained PTFE powder.

[Step A3]

To about 5 kg of the aqueous emulsion obtained in step A2, a nonionic surfactant (a) (Newcol 1308FA manufactured by Nippon Nyukazai Co., Ltd.) at a ratio of 100 mass% to the mass (630 g) of PTFE contained in the aqueous emulsion, ammonium laurate at a ratio of 0.17 mass% to the mass of PTFE contained in the aqueous emulsion, and triethanolamine lauryl sulfate at a ratio of 0.06 mass% to the mass of PTFE contained in the aqueous emulsion, were dissolved, the pH was adjusted to 10.4 with ammonia water, and the liquid was transferred to a vessel with a bottom outlet cock and kept in an oven at 80°C for 150 minutes. Then, it was cooled at room temperature, and when the vessel surface temperature of the lower phase concentrated as phase-separated after two hours, become 30°C, it was withdrawn. An aqueous PTFE dispersion wherein the PTFE concentration was 67.5 mass%, and the concentration of the nonionic surfactant (a) was 2.6 mass% to the mass of PTFE contained in the aqueous emulsion, was obtained.

To this aqueous PTFE dispersion, PEO at a ratio of 0.05 mass% to the mass of PTFE contained in the aqueous emulsion, water, and ammonia water were added, and the nonionic surfactant (a) was added so that the content of the nonionic surfactant (a) to the mass of PTFE contained in the aqueous emulsion, becomes 4.8 mass%, to prepare an aqueous PTFE dispersion with the PTFE concentration of 60.9 mass%. The viscosity of the obtained aqueous PTFE dispersion at 23°C was 24 mPa s, pH = 10.5, and surface tension was 30 (mN/m). Here, the average primary particle diameter of the PTFE particles in the aqueous PTFE dispersion was the same as the average primary particle diameter of the PTFE particles measured in the above aqueous emulsion.

Using this aqueous PTFE dispersion, the crack critical film thickness was obtained. The evaluation results of the obtained aqueous PTFE dispersion are shown in Table 1. Here, the recovery rate was obtained by the following procedure.

It was obtained by measuring the mass of PTFE contained in the aqueous emulsion recovered from the lower phase, which was phase-separated and concentrated, and dividing it by the mass of PTFE contained in the aqueous emulsion charged before the start of concentration.

In a similar manner, to 5 kg of the aqueous emulsion obtained in step A2, the nonionic surfactant (a) was concentrated at a rate of 22 mass% to the mass of PTFE contained in the aqueous emulsion charged before the start of concentration, and the results of the same preparation are shown in Ex. 2. Further, the results of conducting concentration of the nonionic surfactant (a) at a rate of 150 mass% to the mass of PTFE contained in the aqueous emulsion charged before the start of concentration, and conducting the same preparation, are shown in Ex. 3.

[Step A2']

The same procedure as in [step A2] was conducted, except that 1 mg of hydroquinone was added before introducing TFE, and the mixture was stirred for 5 minutes and then pressurized with TFE to 1.96 MPa. The polymerization time was 91 minutes.

The solid content concentration (concentration of PTFE particles) of the aqueous emulsion was about 12 mass%. Further, the average primary particle diameter of the PTFE particles in the aqueous emulsion was 0.204 $\mu$m (204 nm).

A portion of the obtained aqueous emulsion was adjusted to 20°C and stirred to agglomerate the PTFE particles to obtain PTFE powder. Then, this PTFE powder was dried at 275°C together with an ammonium carbonate solution. SSG of the obtained PTFE powder was 2.204. Further, no by-product fluorinated oligomers were confirmed in the obtained PTFE powder.

[Step A3']

The same procedure as in [step A3] was conducted except that to about 5 kg of the aqueous emulsion obtained in step A2', a nonionic surfactant (b) (Tergitol TMN-100X manufactured by Dow Chemical Company) was used instead of the nonionic surfactant (a), at a rate of 40 mass% to the mass (597 g) of PTFE contained in the aqueous emulsion.

And, an aqueous PTFE dispersion in which the PTFE concentration was 69.2 mass% and the nonionic surfactant (b) concentration was 3.2 mass% to the mass of PTFE contained in the aqueous emulsion, was obtained. To this aqueous PTFE dispersion, PEO at a rate of 0.05 mass% to the mass of PTFE, water, and ammonia water were added, and the nonionic surfactant (b) was added so that the content of the nonionic surfactant (b) to the mass of PTFE contained in the aqueous emulsion became 4.8 mass%, to prepare an aqueous PTFE dispersion in which the PTFE concentration was 60.7 mass%. The viscosity of the obtained aqueous PTFE dispersion at 23°C was 22 mPa s, pH = 10.2, and the surface tension was 29 (mN/m). Further, the average primary particle diameter of the PTFE particles in the aqueous PTFE dispersion was the same as the average primary particle diameter of the PTFE particles measured in the above aqueous emulsion.

The same procedure as in [step A3] was conducted to obtain the crack critical film thickness and recovery rate, which are shown in Ex. 9 in Table 1.

(Ex. 4)

[Step B1]

Into a 100 L stainless steel autoclave, paraffin wax (1,500 g) and deionized water (60 L) were charged. After replacing the autoclave with nitrogen, the pressure was reduced, and PEG 1000 (number-average molecular weight: 900 to1,100, polyethylene glycol) (0.098 g) and deionized water (1 L) were poured and charged into the autoclave.

Next, by adjusting the inside of the autoclave to a state of at most the atmospheric pressure, the temperature was raised to 75°C while the solution in the autoclave was stirred. Then, a solution of ammonium persulfate (0.11 g) as an oxidizing agent, dissolved in deionized water (1 L) was injected into the autoclave.

[Step B2]

After 10 minutes, the autoclave was pressurized to 1.96 MPa with TFE, and a solution of ammonium persulfate (0.54 g) and disuccinic acid peroxide (80 mass% concentration, rest being water) (53 g) dissolved in warm water (1 L) at about 70°C, was injected into the autoclave.

After the internal pressure in the autoclave dropped to 1.89 MPa, TFE was added to keep the pressure at 1.96 MPa to let the polymerization of TFE proceed.

When the amount of TFE added reached 9 kg, the reaction was terminated, and TFE in the autoclave was released to the atmosphere. The polymerization time was 89 minutes.

The solid content concentration (concentration of PTFE particles) of the aqueous emulsion was about 12 mass%. Further, the average primary particle diameter of the PTFE particles in the aqueous emulsion was 0.192 $\mu$m (192 nm).

A portion of the obtained aqueous emulsion was adjusted to 20°C and stirred to agglomerate the PTFE particles to obtain PTFE powder. Then, this PTFE powder was dried at 275°C together with an ammonium carbonate aqueous solution. SSG of the obtained PTFE powder was 2.209.

Further, no by-product fluorinated oligomers were confirmed in the obtained PTFE powder.

[Step B3]

The aqueous emulsion obtained in step B2 was concentrated as in Ex. 1 to prepare an aqueous PTFE dispersion with a PTFE concentration of 60.5 mass%. The viscosity of the obtained aqueous PTFE dispersion at 23°C was 23 mPa·s, pH = 10.2, and the surface tension was 31 (mN/m). Further, the average primary particle diameter of PTFE particles in the aqueous PTFE dispersion was the same as the average primary particle diameter of PTFE particles measured in the above aqueous emulsion. The evaluation results are shown in Ex.4 in Table 1.

(Ex. 5)

[Step C1]

Into a 100 L stainless steel autoclave, paraffin wax (1,500 g) and deionized water (60 L) were charged. After replacing the autoclave with nitrogen, the pressure was reduced, and polyethylene glycol 4,000,000 (average molecular weight: 3.6 to 4 million) (0.087 g) and deionized water (1 L) were poured and charged into the autoclave.
Next, by adjusting the inside of the autoclave to a state of at most the atmospheric pressure, the temperature was raised to 75°C while the solution in the autoclave was stirred.
By pressurizing to 1.96 MPa by TFE, a solution of ammonium persulfate (0.54 g) and disuccinic acid peroxide (80 mass% concentration, rest being water) (53 g) dissolved in warm water (1 L) at about 70°C, was injected into the autoclave.
After the internal pressure in the autoclave dropped to 1.89 MPa, TFE was added to keep the pressure at 1.96 MPa to let the polymerization of TFE proceed.
When the amount of TFE added reached 9 kg, the reaction was terminated, and TFE in the autoclave was released to the atmosphere. The polymerization time was 89 minutes.
The solid content concentration (concentration of PTFE particles) of the aqueous emulsion was about 13 mass%. Further, the average primary particle diameter of the PTFE particles in the aqueous emulsion was 0.200 μm (200 nm).
A portion of the obtained aqueous emulsion was adjusted to 20°C and stirred to agglomerate the PTFE particles to obtain PTFE powder. Then, this PTFE powder was dried at 275°C together with an ammonium carbonate aqueous solution. SSG of the obtained PTFE powder was 2.199.
Further, no by-product fluorinated oligomers were confirmed in the obtained PTFE powder.

[Step C2]

The aqueous emulsion obtained in step C1 was concentrated as in Ex. 1 to prepare an aqueous PTFE dispersion with a PTFE concentration of 60.8 mass%. The viscosity of the obtained aqueous PTFE dispersion at 23°C was 23 mPa s, pH = 10.5, and the surface tension was 30 (mN/m). Further, the average primary particle diameter of PTFE particles in the aqueous PTFE dispersion was the same as the average primary particle diameter of PTFE particles measured in the above aqueous emulsion. The evaluation results are shown in Ex. 5 in Table 1.
The results of concentrating the nonionic surfactant (a) in the same manner, at a rate of 22 mass% of the mass of PTFE contained in the aqueous emulsion charged before the start of concentration, and conducting the same preparation, are shown in Ex. 6. Further, the results of conducting concentration the nonionic surfactant (a) at a ratio of 150 mass% to the mass of PTFE contained in the aqueous emulsion charged before the start of concentration, and conducting the same preparation, are shown in Ex. 7.

(Ex. 8)

[Step C1]

By replacing the polyethylene glycol 4,000,000 used in step C1 in Ex. 5 with polyethylene glycol 400 (average molecular weight: 360 to 440) (0.45 g), polymerization was conducted. The polymerization time was 95 minutes.
The solid content concentration (concentration of PTFE particles) of the aqueous emulsion was about 12 mass%. Further, the average primary particle diameter of the PTFE particles in the aqueous emulsion was 0.188 μm (188 nm).
A portion of the obtained aqueous emulsion was adjusted to 20°C and stirred to agglomerate the PTFE particles to obtain PTFE powder. Then, this PTFE powder was dried at 275°C together with an ammonium carbonate aqueous solution. SSG of the obtained PTFE powder was 2.187.
Further, no by-product fluorinated oligomers were confirmed in the obtained PTFE powder.

[Step C2]

By concentrating the aqueous emulsion obtained in step C1 in the same manner as in Ex. 1, an aqueous PTFE dispersion wherein the PTFE concentration was 60.5 mass%, was prepared. The viscosity of the obtained aqueous PTFE dispersion at 23°C was 24 mPa s, pH = 10.2, and the surface tension was 31 (mN/m). Further, the average primary particle diameter of PTFE particles in the aqueous PTFE dispersion was the same as the average primary particle diameter of PTFE particles measured in the above aqueous emulsion. The evaluation results are shown in Ex. 8 in Table 1.

(Ex. 10)

[Step C1]

By replacing the polyethylene glycol 4,000,000 used in step C1 in Ex. 5 with PEO-2 (average molecular weight: 400,000 to 600,000, manufactured by Sumitomo Seika Chemicals Company, Limited) (0.087 g), polymerization was conducted. The polymerization time was 85 minutes.

The solid content concentration (concentration of PTFE particles) of the aqueous emulsion was about 12 mass%. Further, the average primary particle diameter of the PTFE particles in the aqueous emulsion was 0.199 μm (199 nm).

A portion of the obtained aqueous emulsion was adjusted to 20°C and stirred to agglomerate the PTFE particles to obtain PTFE powder. Then, this PTFE powder was dried at 275°C together with an ammonium carbonate aqueous solution. SSG of the obtained PTFE powder was 2.207.

Further, no by-product fluorinated oligomers were confirmed in the obtained PTFE powder.

[Step C2']

The same procedure as in [step C2] was conducted except that to about 5 kg of the aqueous emulsion obtained in step C1, a nonionic surfactant (b) (Tergitol TMN-100X manufactured by Dow Chemical Company) was used instead of the nonionic surfactant (a), at a rate of 40 mass% to the mass (617 g) of PTFE contained in the aqueous emulsion.

And, an aqueous PTFE dispersion wherein the PTFE concentration was 68.9 mass% and the nonionic surfactant (b) concentration was 3.3 mass% to the mass of PTFE contained in the aqueous emulsion, was obtained. To this aqueous PTFE dispersion, PEO at a rate of 0.05 mass% to the mass of PTFE contained in the aqueous emulsion, water, and ammonia water, were added, and the nonionic surfactant (b) was added so that the content of the nonionic surfactant (b) to the mass of PTFE contained in the aqueous emulsion became 4.8 mass%, to prepare an aqueous PTFE dispersion wherein the PTFE concentration was 60.8 mass%. The viscosity of the obtained aqueous PTFE dispersion at 23°C was 21 mPa s, pH = 10.0, and the surface tension was 29 (mN/m). Further, the average primary particle diameter of the PTFE particles in the aqueous PTFE dispersion was the same as the average primary particle diameter of the PTFE particles measured in the above aqueous emulsion.

The same procedure as in [step A3] was conducted to obtain the crack critical film thickness and recovery rate, which are shown in Ex. 10 in Table 1.

In Table 1, the column of "Amount of non-fluorinated monomer used" indicates the amount of the non-fluorinated monomer used to the amount of TFE supplied.

The column of "Amount of nucleating additive used" indicates the amount of the nucleating additive used to the amount of TFE supplied.

The column of "Amount of polyalkylene oxide used" indicates the amount of the polyalkylene oxide used to the amount of TFE supplied.

The column of "Amount of nonionic surfactant used" indicates the amount of the nonionic surfactant used to the mass of PTFE contained in the aqueous emulsion before the start of concentration.

[Table 1]

| TABLE 1 | | Ex. 1 | Ex. 2 | Ex. 3 | Ex. 4 | Ex. 5 | Ex. 6 | Ex. 7 | Ex. 8 | Ex. 9 | Ex. 10 |
|---|---|---|---|---|---|---|---|---|---|---|---|
| Amount of non-fluorinated monomer used (mass ppm) | | 28 | 28 | 28 | - | - | - | - | - | 28 | - |
| Amount of nucleating additive used (mass ppm) | | - | - | - | 11 | - | - | - | - | - | - |
| Amount of polyalkylene oxide used (mass ppm) | | - | - | - | - | 10 | 10 | 10 | 50 | - | 10 |
| SSG | | 2.202 | 2.202 | 2.202 | 2.209 | 2.199 | 2.199 | 2.199 | 2.187 | 2.204 | 2.207 |
| Aqueous dispersion | Average particle diameter (nm) | 206 | 206 | 206 | 192 | 200 | 200 | 200 | 188 | 204 | 199 |
| | Amount of nonionic surfactant used (mass% to PTFE) | 100 | 22 | 150 | 100 | 100 | 22 | 150 | 100 | 40 | 40 |
| | Prepared PTFE concentration (mass%) | 60.9 | 61.1 | 60.2 | 60.5 | 60.8 | 61.0 | 60.0 | 60.5 | 60.7 | 60.8 |
| | Viscosity (mPa.s) | 24 | 22 | 26 | 23 | 23 | 23 | 24 | 24 | 22 | 21 |
| | pH | 10.5 | 10.1 | 10.1 | 10.2 | 10.5 | 10.2 | 10.2 | 10.2 | 10.2 | 10.0 |
| | Surface tension (mN/m) | 30 | 30 | 31 | 31 | 30 | 31 | 31 | 31 | 29 | 29 |
| Crack-limiting film thickness (CFT) ($\mu$m) | | 11 | 11 | 9 | 10 | 11 | 10 | 9 | 10 | 10 | 12 |
| Presence or absence of fluorinated oligomers | | Absent | Absent | Absent | Absent | Absent | Absent | Absent | Absent | Absent | Absent |
| Mass (g) of PTFE contained in aqueous emulsion before the start of concentration | | 630 | 634 | 594 | 632 | 631 | 661 | 627 | 598 | 597 | 617 |
| Specific gravity of concentrated recovered solution | | 1.634 | 1.586 | 1.627 | 1.640 | 1.646 | 1.592 | 1.592 | 1.618 | 1.666 | 1.644 |
| Mass (g) of PTFE contained in aqueous emulsion after concentration | | 441 | 416 | 221 | 507 | 515 | 315 | 316 | 542 | 320 | 377 |
| Recovery rate (%) | | 71 | 66 | 37 | 80 | 82 | 48 | 50 | 91 | 54 | 61 |

EP 4 299 642 A1

As shown in Table 1, according to the production method of the present invention, it is possible to produce an aqueous PTFE dispersion which exhibits the desired effects.

The entire disclosure of Japanese Patent Application No. 2021-027626, filed on February 24, 2021 including specification, claims and summary is incorporated herein by reference in its entirety.

## Claims

1. A method for producing an aqueous polytetrafluoroethylene dispersion, which comprises

   step A1 of polymerizing a non-fluorinated monomer in an aqueous medium to obtain a solution 1 containing a polymer containing units based on the non-fluorinated monomer,
   step A2 of conducting polymerization of tetrafluoroethylene in the solution 1 without substantially adding any surfactant to the solution 1, to obtain an aqueous emulsion containing polytetrafluoroethylene particles, and
   step A3 of adding a nonionic surfactant to the aqueous emulsion at a rate of from 10 to 150 mass% to the mass of polytetrafluoroethylene contained in the aqueous emulsion, and subsequently concentrating the aqueous emulsion to obtain an aqueous polytetrafluoroethylene dispersion,
   wherein the amount of the non-fluorinated monomer used, to the amount of the tetrafluoroethylene supplied to the polymerization system, is at most 200 mass ppm.

2. The method for producing an aqueous polytetrafluoroethylene dispersion according to Claim 1, wherein between step A2 and step A3, or at the time of step A3, an anionic surfactant is added to the aqueous emulsion at a rate of from 1,000 to 5,000 mass ppm to the mass of polytetrafluoroethylene contained in the aqueous emulsion.

3. The method for producing an aqueous polytetrafluoroethylene dispersion according to Claim 1 or 2, wherein the non-fluorinated monomer is a monomer represented by the formula (1):

   Formula (1)         $CH_2=CR^{11}-L^1-R^{12}$

   in the formula (1), $R^{11}$ represents a hydrogen atom or an alkyl group, $L^1$ represents a single bond, -CO-O-*, -O-CO-* or -O-, * represents the bonding position with $R^{12}$, and $R^{12}$ represents a hydrogen atom, an alkyl group, an alkenyl group or a nitrile group, provided that when $L^1$ is a single bond, $R^{12}$ is a nitrile group.

4. The method for producing an aqueous polytetrafluoroethylene dispersion according to any one of Claims 1 to 3, wherein the content of the polytetrafluoroethylene particles in the aqueous polytetrafluoroethylene dispersion is from 50 to 70 mass% to the entire amount of the aqueous polytetrafluoroethylene dispersion.

5. The method for producing an aqueous polytetrafluoroethylene dispersion according to any one of Claims 1 to 4, wherein in step A3, after adding the nonionic surfactant to the aqueous emulsion at a rate of from 10 to 150 mass% to the mass of the polytetrafluoroethylene contained in the aqueous emulsion, the aqueous emulsion is heated at from 50 to 100°C and further allowed to stand still for from 1 to 10 hours to let the aqueous emulsion undergo phase-separation, whereupon the lower phase in which the polytetrafluoroethylene particles are concentrated is recovered as the aqueous polytetrafluoroethylene dispersion.

6. A method for producing an aqueous polytetrafluoroethylene dispersion, which comprises

   step B1 of mixing at least one type of nucleating additive selected from the group consisting of a polyalkylene oxide compound and a hydrocarbon-containing surfactant, and an oxidizing agent in an aqueous medium to obtain a solution 2,
   step B2 of conducting polymerization of tetrafluoroethylene in the solution 2 without substantially adding any surfactant to the solution 2 to obtain an aqueous emulsion containing polytetrafluoroethylene particles, and
   step B3 of adding a nonionic surfactant to the aqueous emulsion at a rate of from 10 to 150 mass% to the mass of polytetrafluoroethylene contained in the aqueous emulsion, and subsequently concentrating the aqueous emulsion to obtain an aqueous polytetrafluoroethylene dispersion,
   wherein the amount of the nucleating additive used, to the amount of the tetrafluoroethylene supplied to the polymerization system is at most 100 mass ppm.

7. The method for producing an aqueous polytetrafluoroethylene dispersion according to Claim 6, wherein between step B2 and step B3, or at the time of step B3, an anionic surfactant is added to the aqueous emulsion at a rate of from 1,000 to 5,000 mass ppm to the mass of the polytetrafluoroethylene contained in the aqueous emulsion.

8.  The method for producing an aqueous polytetrafluoroethylene dispersion according to Claim 6 or 7, wherein the content of the polytetrafluoroethylene particles in the aqueous polytetrafluoroethylene dispersion is from 50 to 70 mass% to the entire amount of the aqueous polytetrafluoroethylene dispersion.

9.  The method for producing an aqueous polytetrafluoroethylene dispersion according to any one of Claims 6 to 8, wherein in step B3, after adding the nonionic surfactant to the aqueous emulsion at a rate of from 10 to 150 mass% to the mass of the polytetrafluoroethylene contained in the aqueous emulsion, the aqueous emulsion is heated at from 50 to 100°C and further allowed to stand still for from 1 to 10 hours to let the aqueous emulsion undergo phase-separation, whereupon the lower phase in which the polytetrafluoroethylene particles are concentrated is recovered as the aqueous polytetrafluoroethylene dispersion.

10. The method for producing an aqueous polytetrafluoroethylene dispersion according to any one of Claims 6 to 9, wherein the nucleating additive is a polyalkylene oxide compound.

11. The method for producing an aqueous polytetrafluoroethylene dispersion according to any one of Claims 6 to 10, wherein the amount of the oxidizing agent used is from 0.5 to 100 mass ppm to the entire mass of the aqueous medium.

12. A method for producing an aqueous polytetrafluoroethylene dispersion, which comprises

    step C1 of conducting polymerization of tetrafluoroethylene in an aqueous medium in the presence of a polyalkylene oxide compound, without substantially using any surfactant, to obtain an aqueous emulsion containing polytetrafluoroethylene particles, and
    step C2 of adding a nonionic surfactant to the aqueous emulsion at a rate of from 10 to 150 mass% to the mass of polytetrafluoroethylene contained in the aqueous emulsion, and subsequently concentrating the aqueous emulsion to obtain an aqueous polytetrafluoroethylene dispersion,
    wherein the amount of the polyalkylene oxide compound used is at most 100 mass ppm to the amount of the tetrafluoroethylene supplied to the polymerization system.

13. The method for producing an aqueous polytetrafluoroethylene dispersion according to Claim 12, wherein between step C1 and step C2, or at the time of step C2, an anionic surfactant is added to the aqueous emulsion, at a rate of from 1,000 to 5,000 mass ppm to the mass of the polytetrafluoroethylene contained in the aqueous emulsion.

14. The method for producing an aqueous polytetrafluoroethylene dispersion according to Claim 12 or 13, wherein in step C2, after adding the nonionic surfactant to the aqueous emulsion at a rate of from 10 to 150 mass% to the mass of the polytetrafluoroethylene contained in the aqueous emulsion, the aqueous emulsion is heated at from 50 to 100°C and further allowed to stand still for from 1 to 10 hours to let the aqueous emulsion undergo phase-separation, whereupon the lower phase in which the polytetrafluoroethylene particles are concentrated is recovered as the aqueous polytetrafluoroethylene dispersion.

## INTERNATIONAL SEARCH REPORT

| International application No. |
|---|
| **PCT/JP2022/007503** |

**A. CLASSIFICATION OF SUBJECT MATTER**

*C08F 265/06*(2006.01)i; *C08J 3/02*(2006.01)i
FI: C08J3/02 C CEW; C08F265/06

According to International Patent Classification (IPC) or to both national classification and IPC

**B. FIELDS SEARCHED**

Minimum documentation searched (classification system followed by classification symbols)

C08F265/06; C08J3/02

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2019/208707 A1 (AGC INC.) 31 October 2019 (2019-10-31)<br>claims, paragraphs [0002], [0004], [0005], [0010], [0018], [0023], [0085] | 1-14 |
| Y | JP 2005-501956 A (3M INNOVATIVE PROPERTIES CO.) 20 January 2005 (2005-01-20)<br>claims, paragraph [0034] | 1-14 |
| A | WO 2019/065638 A1 (AGC INC.) 04 April 2019 (2019-04-04) | 1-14 |
| A | WO 2019/065640 A1 (AGC INC.) 04 April 2019 (2019-04-04) | 1-14 |
| P, X | WO 2021/085470 A1 (AGC INC.) 06 May 2021 (2021-05-06)<br>claims | 1-14 |

☐ Further documents are listed in the continuation of Box C.　　☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **29 March 2022** | **12 April 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
**Information on patent family members**

International application No.

**PCT/JP2022/007503**

| Patent document cited in search report | | | Publication date (day/month/year) | Patent family member(s) | | | Publication date (day/month/year) |
|---|---|---|---|---|---|---|---|
| WO | 2019/208707 | A1 | 31 October 2019 | US | 2021/0009732 | A1 | |
| | | | | claims, examples | | | |
| | | | | EP | 3786203 | A1 | |
| | | | | CN | 112041358 | A | |
| JP | 2005-501956 | A | 20 January 2005 | US | 2004/0186219 | A1 | |
| | | | | claims | | | |
| | | | | WO | 2003/020836 | A1 | |
| | | | | EP | 1427788 | A1 | |
| | | | | CN | 1551909 | A | |
| | | | | KR | 10-2004-0044531 | A | |
| WO | 2019/065638 | A1 | 04 April 2019 | US | 2020/0207880 | A1 | |
| | | | | EP | 3689916 | A1 | |
| | | | | CN | 111148770 | A | |
| WO | 2019/065640 | A1 | 04 April 2019 | US | 2020/0216591 | A1 | |
| | | | | EP | 3689921 | A1 | |
| | | | | CN | 111148773 | A | |
| WO | 2021/085470 | A1 | 06 May 2021 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016537499 A
- US 6841616 B, (Wille
- US 7977438 B, Brothers
- JP 2021027626 A